# EUROPEAN PATENT APPLICATION

(11) **EP 4 192 134 A1**
(43) Date of publication of application: **07.06.2023**
(21) Application number: 20949043.2
(22) Date of filing: 12.08.2020
(51) Int. Cl.: H04W 56/00

(54) **COMMUNICATION METHOD, COMMUNICATION APPARATUS, TERMINAL DEVICE AND USER PLANE NETWORK ELEMENT**

(71) Applicant: Huawei Technologies Co., Ltd., Shenzhen, Guangdong 518129 (CN)
(72) Inventor: LI, Hancheng, Shenzhen, Guangdong 518129 (CN)
(74) Representative: Maiwald GmbH
(86) International application number: PCT/CN2020/108744
(87) International publication number: WO 2022/032544

(57) **Abstract**

This application provides a communication method, a communication apparatus, a terminal device, and a user plane network element. The method includes: detecting, by a terminal device, whether a clock source declaration from a user plane network element is received within first duration, where a port status of the terminal device is a slave state or a passive state; and when the terminal device does not receive the clock source declaration from the user plane network element within the first duration, sending a clock source declaration from a remote device to the user plane network element. According to the method, when the terminal device does not receive the clock source declaration from the user plane network element within the first duration, it indicates that the user plane network element cannot receive a clock source declaration from another terminal device. Therefore, the clock source declaration of the remote device may be sent to the user plane network element, to ensure that the user plane network element can synchronize with a clock source from the remote device and can forward the clock source declaration, and ensure reliability of synchronization of a 5G system with an external clock source.

## Description

### TECHNICAL FIELD

This application relates to the field of mobile communication technologies, and in particular, to a communication method, a communication apparatus, a terminal device, and a user plane network element.

### BACKGROUND

In a network architecture in which a 3rd generation partnership project (3rd generation partnership project, 3GPP) network (using a 5th generation (the 5th generation, 5G) system as an example) interworks with a time sensitive network (Time Sensitive Network, TSN), the 5G system and a TSN translator (TSN Translator) function as a logical TSN switching node (referred to as a 5G system bridge node) as a whole.

The 5G system bridge node includes one or more terminal devices. The 5G system bridge node supports synchronization with an external TSN clock source by using the terminal device or the TSN translator. However, currently, there is no good solution to ensure reliability of clock synchronization.

### SUMMARY

This application provides a communication method, a communication apparatus, a terminal device, and a user plane network element, to ensure reliability of clock synchronization.

According to a first aspect, this application provides a communication method. The method includes: detecting, by a terminal device, whether a clock source declaration from a user plane network element is received within first duration, where a port status of the terminal device is a slave state or a passive state; and when the terminal device does not receive the clock source declaration from the user plane network element within the first duration, sending a clock source declaration from a remote device to the user plane network element.

According to the foregoing solution, when the terminal device does not receive the clock source declaration from the user plane network element within the first duration, it indicates that the user plane network element cannot receive a clock source declaration from another terminal device. Therefore, the terminal device may send the clock source declaration of the remote device to the user plane network element, to ensure that the user plane network element can synchronize with a clock source from the remote device and can forward a clock source declaration, and ensure reliability of synchronization of a 5G system with an external clock source.

In a possible implementation method, the terminal device receives configuration information from a control plane network element, where the configuration information is for configuring the port status of the terminal device to the slave state or the passive state; or the terminal device determines that a clock source corresponding to the clock source declaration from the user plane network element is the same as a clock source corresponding to the clock source declaration from the remote device, and determines that the port status of the terminal device is the slave state or the passive state.

According to this solution, the port status of the terminal device may be configured by a control plane, or the terminal device determines the port status of the terminal device, to ensure that the terminal device can receive an external clock source declaration in time, and improve reliability of clock synchronization.

In a possible implementation method, the terminal device receives a clock synchronization packet from the remote device, and the terminal device performs clock synchronization based on the clock synchronization packet.

According to this solution, the terminal device synchronizes with an external clock source from a remote device side, to improve reliability of clock synchronization.

In a possible implementation method, the terminal device receives a clock synchronization packet from the user plane, and the terminal device performs clock synchronization based on the clock synchronization packet.

According to this solution, the terminal device synchronizes with an external clock source from a user plane network element side, to improve reliability of clock synchronization.

In a possible implementation method, when the port status of the terminal device is the passive state, and the terminal device does not receive the clock source declaration from the user plane network element within the first duration, the terminal device determines that the port status of the terminal device is the slave state.

According to this solution, when the terminal device does not receive the clock source declaration from the user plane network element within the first duration, it indicates that the user plane network element cannot receive a clock source declaration from another terminal device. Therefore, the terminal device may determine the port status of the terminal device as a slave state, to ensure that the clock source declaration of the remote device can be sent to the user plane network element, ensure that the user plane network element can synchronize with a clock source from the remote device, and ensure reliability of synchronization of a 5G system with an external clock source.

According to a second aspect, this application provides a communication method. The method includes: A user plane network element receives a clock source declaration from a first terminal device at a first moment; the user plane network element sends the clock source declaration from the first terminal device through a port of the user plane network element or a terminal device in a master port state; and if the user plane network element does not receive the clock source declaration from the first terminal device within first duration, or the user plane network element receives, from a control plane network element, indication information that indicates to send a clock source declaration from a second terminal device, the user plane network element sends the clock source declaration from the second terminal device through the port of the user plane network element or the terminal device in the master port state, where the first duration is later than the first moment, where a clock source corresponding to the clock source declaration from the first terminal device is the same as a clock source corresponding to the clock source declaration from the second terminal device.

According to the foregoing solution, the user plane network element first forwards the clock source declaration from the first terminal device. When the user plane network element cannot receive the clock source declaration from the first terminal device, but can receive the clock source declaration from the second terminal device, the user plane network element forwards the clock source declaration from the second terminal device. This can ensure that a 5G system can synchronize with an external clock source, and ensure reliability of clock synchronization.

In a possible implementation method, the user plane network element determines that the clock source declaration from the first terminal device is the same as the clock source declaration from the second terminal device, and determines to send the clock source declaration from the first terminal device; or the user plane network element receives configuration information from the control plane network element, where the configuration information is for configuring the user plane network element to send the clock source declaration from the first terminal device.

According to the foregoing solution, the user plane network element may determine to forward the clock source declaration from the first terminal device, or the control plane indicates the user plane network element to forward the clock source declaration from the first terminal device, so that reliability of clock synchronization can be ensured.

In a possible implementation method, when the user plane network element does not receive the clock source declaration from the first terminal device within the first duration, the user plane network element sends indication information to the control plane network element, where the indication information indicates that the clock source declaration from the first terminal device is not received within the first duration; and/or the user plane network element sends notification information to the control plane network element, where the notification information indicates that the user plane network element sends the clock source declaration from the second terminal device.

According to the foregoing solution, when the user plane network element does not receive the clock source declaration from the first terminal device within the first duration, the user plane network element may notify the control plane network element, so that the control plane network element may configure the user plane network element or the second terminal device, so that the user plane network element can forward the clock source declaration from the second terminal device, to ensure reliability of clock synchronization.

In a possible implementation method, the first duration is preconfigured, or the first duration is configured by the control plane network element.

In a possible implementation method, the user plane network element sends the clock source declaration from the first terminal device to the second terminal device.

According to a third aspect, this application provides a communication method. The method includes: A control plane network element receives a clock source declaration from a first terminal device; the control plane network element determines that a port status of the first terminal device is a slave state; the control plane network element receives a clock source declaration from a second terminal device; the control plane network element determines that a clock source corresponding to the clock source declaration from the second terminal device is the same as a clock source corresponding to the clock source declaration from the first terminal device, and determines that a port status of the second terminal device is a passive state; and the control plane network element determines that a first condition is met, and determines that the port status of the second terminal device is the slave state, and/or sends first indication information to a user plane network element, where the first indication information indicates the user plane network element to send the clock source declaration from the second terminal device.

According to the foregoing solution, the control plane network element configures a port status of a terminal device, to ensure that a 5G system can synchronize with an external clock source declaration. In addition, when determining that the user plane network element cannot forward the clock source declaration from the first terminal device, the control plane network element may control the user plane network element to forward the clock source declaration from the second terminal device, to improve reliability of clock synchronization.

In a possible implementation method, that the control plane network element determines that a first condition is met includes: The control plane network element receives second indication information from the user plane network element, where the second indication information indicates that the user plane network element does not receive the clock source declaration from the first terminal device within first duration; the control plane network element receives third indication information from the first terminal device, where the third indication information indicates that the first terminal device does not receive a clock source declaration from a remote device within second duration; the control plane network element determines that the first terminal device is abnormal; or the control plane network element receives fourth indication information from the second terminal device, where the fourth indication information indicates that the second terminal device does not receive a clock source declaration from the user plane network element within third duration.

In a possible implementation method, the control plane network element receives notification information from the user plane network element, where the notification information indicates that the user plane network element sends the clock source declaration from the second terminal device.

According to a fourth aspect, this application provides a communication method. The method includes: A control plane network element receives a clock source declaration from a first terminal device; the control plane network element determines that a port status of the first terminal device is a slave state; the control plane network element receives a clock source declaration from a second terminal device; and the control plane network element determines that a clock source corresponding to the clock source declaration from the second terminal device is the same as a clock source corresponding to the clock source declaration from the first terminal device, and determines that a port status of the second terminal device is a slave state.

According to the foregoing solution, the control plane network element configures the port statuses of the first terminal device and the second terminal device as slave states, so that both the first terminal device and the second terminal device can send a same clock source declaration to a user plane network element. In this way, the user plane network element may choose to forward a clock source declaration of one of the terminal devices, and when the user plane network element cannot receive a clock source declaration from one of the terminal devices, the user plane network element may switch to receiving a clock source declaration from another terminal device. This ensures reliability of clock synchronization.

In a possible implementation method, the control plane network element determines that a first condition is met, and sends first indication information to the user plane network element, where the first indication information indicates the user plane network element to send the clock source declaration from the second terminal device.

In a possible implementation method, that the control plane network element determines that a first condition is met includes: The control plane network element receives second indication information from the user plane network element, where the second indication information indicates that the user plane network element does not receive the clock source declaration from the first terminal device within first duration; the control plane network element receives third indication information from the first terminal device, where the third indication information indicates that the first terminal device does not receive a clock source declaration from a remote device within second duration; the control plane network element determines that the first terminal device is abnormal; or the control plane network element receives fourth indication information from the second terminal device, where the fourth indication information indicates that the second terminal device does not receive a clock source declaration from the user plane network element within third duration.

According to a fifth aspect, this application provides a communication apparatus. The apparatus may be a terminal device, or may be a chip used in the terminal device. The apparatus has a function of implementing embodiments of the first aspect. The function may be implemented by hardware, or may be implemented by hardware executing corresponding software. The hardware or the software includes one or more modules corresponding to the function.

According to a sixth aspect, this application provides a communication apparatus. The apparatus may be a user plane network element, or may be a chip used in the user plane network element. The apparatus has a function of implementing embodiments of the second aspect. The function may be implemented by hardware, or may be implemented by hardware executing corresponding software. The hardware or the software includes one or more modules corresponding to the function.

According to a seventh aspect, this application provides a communication apparatus. The apparatus may be a control plane network element, or may be a chip used in the control plane network element. The apparatus has a function of implementing embodiments of the third aspect or embodiments of the fourth aspect. The function may be implemented by hardware, or may be implemented by hardware executing corresponding software. The hardware or the software includes one or more modules corresponding to the function.

According to an eighth aspect, this application provides a communication apparatus, including a processor and a memory. The memory is configured to store computer-executable instructions; and when the apparatus runs, the processor executes the computer-executable instructions stored in the memory, to enable the apparatus to perform any communication method in the first aspect to the fourth aspect.

According to a ninth aspect, this application provides a communication apparatus, including units or means (means) configured to perform steps of any communication method in the first aspect to the fourth aspect.

According to a tenth aspect, this application provides a communication apparatus, including a processor and an interface circuit. The processor is configured to: communicate with another apparatus through the interface circuit, and perform any communication method in the first aspect to the fourth aspect. There are one or more processors.

According to an eleventh aspect, this application provides a communication apparatus, including a processor, configured to: be connected to a memory, and invoke a program stored in the memory, to perform any communication method in the first aspect to the fourth aspect. The memory may be located inside or outside the apparatus. There are one or more processors.

According to a twelfth aspect, this application further provides a computer-readable storage medium. The computer-readable storage medium stores instructions. When the instructions are run on a computer, a processor is enabled to perform any communication method in the first aspect to the fourth aspect.

According to a thirteenth aspect, this application further provides a computer program product including instructions. When the computer program product runs on a computer, the computer is enabled to perform any communication method in the first aspect to the fourth aspect.

According to a fourteenth aspect, this application further provides a chip system, including a processor, configured to perform any communication method in the first aspect to the fourth aspect.

### BRIEF DESCRIPTION OF DRAWINGS

FIG. 1 is a schematic diagram of a 5G network architecture based on a service-oriented architecture;
FIG. 2 is a schematic diagram of clock synchronization;
FIG. 3 is a schematic diagram of a clock synchronization spanning tree;
FIG. 4 is a schematic diagram of a system architecture in which a 3GPP network interworks with TSN;
FIG. 5 is a schematic diagram of a clock source on a 3GPP R17 UE side;
FIG. 6 is an example of clock synchronization;
FIG. 7(a) is a schematic diagram of a communication method according to an embodiment of this application;
FIG. 7(b) is a schematic diagram of a communication method according to an embodiment of this application;
FIG. 7(c) is a schematic diagram of a communication method according to an embodiment of this application;
FIG. 8(a) is another example of clock synchronization;
FIG. 8(b) is a schematic diagram of another communication method according to an embodiment of this application;
FIG. 8(c) is a schematic diagram of another communication method according to an embodiment of this application;
FIG. 9(a) is still another example of clock synchronization;
FIG. 9(b) is a schematic diagram of still another communication method according to an embodiment of this application;
FIG. 9(c) is a schematic diagram of still another communication method according to an embodiment of this application;
FIG. 10(a) is yet another example of clock synchronization;
FIG. 10(b) is a schematic diagram of yet another communication method according to an embodiment of this application;
FIG. 10(c) is a schematic diagram of yet another communication method according to an embodiment of this application;
FIG. 11 is a schematic diagram of a communication apparatus according to an embodiment of this application;
FIG. 12 is a schematic diagram of a communication apparatus according to an embodiment of this application;
FIG. 13 is a schematic diagram of a terminal device according to an embodiment of this application; and
FIG. 14 is a schematic diagram of a structure of a chip according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more than two.

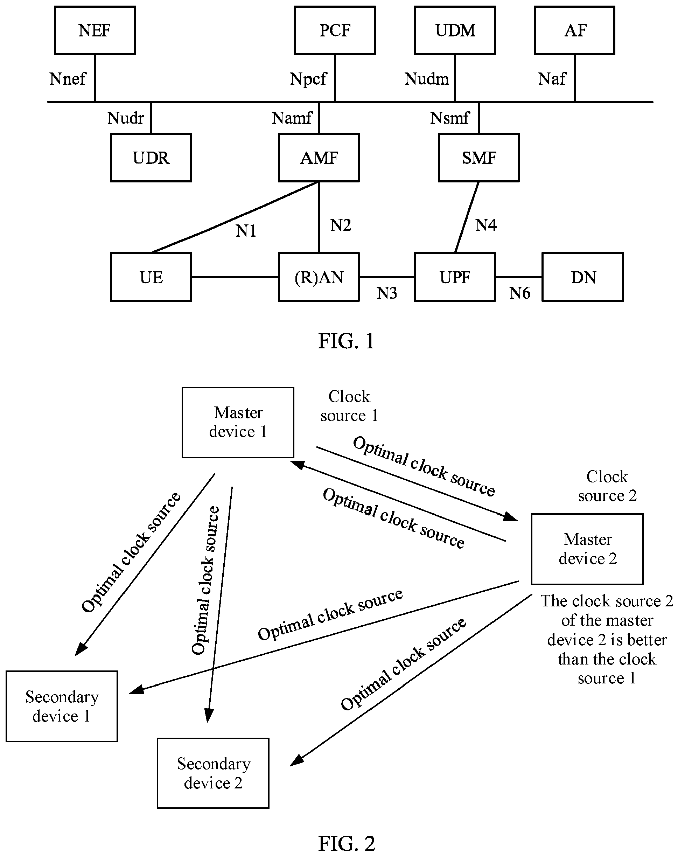

FIG. 1 is a schematic diagram of a 5G network architecture based on a service-oriented architecture. The 5G network architecture shown in FIG. 1 may include three parts: a terminal device, a data network (data network, DN), and a carrier network.

The carrier network may include a network exposure function (network exposure function, NEF) network element, a unified data repository (Unified Data Repository, UDR), a policy control function (policy control function, PCF) network element, a unified data management (unified data management, UDM) network element, an application function (application function, AF) network element, an access and mobility management function (access and mobility management function, AMF) network element, a session management function (session management function, SMF) network element, a (radio) access network ((radio) access network, (R)AN), a user plane function (user plane function, UPF) network element, and the like. In the foregoing carrier network, the parts other than the (radio) access network may be referred to as core network parts. For ease of description, an example in which the (R)AN is referred to as a RAN is used below for description.

The terminal device is a device having a wireless transceiver function, may be deployed on land, and includes an indoor or outdoor device, a handheld device, or a vehicle-mounted device; may be deployed on water (for example, on a ship); or may be deployed in the air (for example, on an airplane, a balloon, and a satellite). The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal device further includes user equipment (user equipment, UE).

The terminal device may establish a connection to the carrier network through an interface (for example, N1) provided by the carrier network, and use services such as data and/or voice provided by the carrier network. The terminal device may further access a DN through the carrier network, and use a carrier service deployed on the DN and/or a service provided by a third party. The third party may be a service provider other than the carrier network and the terminal device, and may provide other services such as data and/or voice for the terminal device. A specific representation form of the third party may be specifically determined based on an actual application scenario, and is not limited herein.

An access network device is also referred to as a (radio) access network ((Radio) Access Network, (R)AN) device, and is a device that provides a wireless communication function for the terminal. For example, the access network device includes but is not limited to: a next generation base station (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission reception point (transmission reception point, TRP), a transmission point (transmission point, TP), a mobile switching center, and the like.

The AMF network element is a control plane network element provided by the carrier network, and is responsible for access control and mobility management for accessing the carrier network by the terminal device, for example, including functions such as mobility status management, allocation of a temporary user identity, and user authentication and authorization.

The SMF network element is a control plane network element provided by the carrier network, and is responsible for managing a protocol data unit (protocol data unit, PDU) session of the terminal device. The PDU session is a channel used to transmit a PDU, and the terminal device needs to transmit a PDU to the DN through the PDU session. The SMF network element is responsible for establishment, maintenance, deletion, and the like of the PDU session. The SMF network element includes session-related functions such as session management (for example, session establishment, modification, and release, including maintenance of a tunnel between the UPF and the RAN), selection and control of the UPF network element, service and session continuity (Service and Session Continuity, SSC) mode selection, and roaming.

The UPF network element is a gateway provided by an operator, and is a gateway for communication between the carrier network and the DN. The UPF network element includes user plane-related functions such as data packet routing and transmission, packet detection, service usage reporting, quality of service (quality of service, QoS) processing, lawful interception, uplink packet detection, and downlink data packet storage.

The DN may also be referred to as a packet data network (packet data network, PDN), and is a network located outside the carrier network. The carrier network may access a plurality of DNs, and a plurality of services may be deployed on the DNs, to provide services such as data and/or voice for the terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, transmit collected sensor data to the control server based on the instructions, and the like. For another example, the DN is an internal office network of a company, a mobile phone or a computer of an employee of the company may be a terminal device, and the mobile phone or the computer of the employee may access information, data resources, and the like in the internal office network of the company.

The UDM network element is a control plane network element provided by the carrier network, and is responsible for storing information such as a subscription permanent identifier (subscriber permanent identifier, SUPI), a security context (security context), and subscription data of a subscriber in the carrier network. The information stored in the UDM network element may be used for authentication and authorization when the terminal device accesses the carrier network. The subscriber in the carrier network may be specifically a user using a service provided by the carrier network, for example, a user using a SIM card of China Telecom, or a user using a SIM card of China Mobile. The subscription permanent identifier (Subscription Permanent Identifier, SUPI) of the subscriber may be a number of the SIM card or the like. A credential and the security context of the subscriber may be stored small files such as an encryption key of the SIM card or information related to encryption of the SIM card, and are used for authentication and/or authorization. The security context may be cookie (cookie), a token (token), or the like stored in a local terminal (for example, a mobile phone) of the user. The subscription data of the subscriber may be a supporting service of the SIM card, for example, a traffic package or a used network of the SIM card. It should be noted that the permanent identifier, the credential, the security context, the cookie (cookie), and the token are equivalent to information related to authentication and authorization, and are not limited or distinguished between each other for ease of description in this application document of the present invention. Unless otherwise specified, the security context is used as an example for description in this embodiment of this application. However, this embodiment of this application is also applicable to authentication and/or authorization information described in another manner.

The NEF network element is a control plane network element provided by the operator. The NEF network element securely exposes an external interface of the carrier network to the third party. When the SMF network element needs to communicate with a third-party network element, the NEF network element may serve as a relay for communication between the SMF network element and the third-party network element. When the NEF network element serves as the relay, the NEF network element may translate identification information of the subscriber and identification information of the third-party network element. For example, when the NEF needs to send the SUPI of the subscriber from the carrier network to the third party, the NEF may translate the SUPI into an external identity (identity, ID) corresponding to the subscriber. On the contrary, when the NEF network element sends an external ID (an ID of the third-party network element) to the carrier network, the NEF network element may translate the external ID into an SUPI.

The PCF network element is a control plane function provided by the operator, and is configured to provide a policy of the PDU session for the SMF network element. The policy may include a charging-related policy, a QoS-related policy, an authorization-related policy, and the like.

The AF network element is a function network element configured to provide various business services, and can interact with a core network through the NEF network element and interact with a policy management framework to perform policy management.

The UDR is configured to store data.

In FIG. 1, Nnef, Npcf, Nudm, Naf, Nudr, Namf, Nsmf, N1, N2, N3, N4, and N6 are interface sequence numbers. For meanings of the interface sequence numbers, refer to meanings defined in a 3GPP standard protocol. This is not limited herein.

It may be understood that the foregoing network elements or the functions may be network elements in a hardware device, software functions running on dedicated hardware, or virtualized functions instantiated on a platform (for example, a cloud platform). Optionally, the foregoing network elements or the functions may be implemented by one device, may be implemented by a plurality of devices, or may be one functional module in one device. This is not specifically limited in embodiments of this application.

A clock synchronization mechanism is defined in existing protocols 1588 and 802.1AS, and can implement high-precision clock synchronization between a network device and a clock source. 1588 supports synchronization in a plurality of clock domains, in other words, the network device can synchronize clocks in different clock domains, that is, synchronize a plurality of clocks. Different clock domains are distinguished by clock domain identifiers. For a single clock domain, 1588/802.1AS supports selection of an optimal clock source from a same TSN for synchronization. A master device releases clock source information of the master device. A secondary device compares received master clock source information to determine the optimal clock source.

FIG. 2 is a schematic diagram of clock synchronization. First, a master device 1 releases a clock source declaration to other devices (including a master device 2, a secondary device 1, and a secondary device 2). The clock source declaration includes parameters such as a clock source priority, a clock source identifier, and clock source precision. After receiving the clock source declaration, the secondary device 1 and the secondary device 2 determine that a clock source 1 of the master device 1 is an optimal clock source. After receiving the clock source declaration sent by the master device 1, the master device 2 determines that a clock source 2 of the master device 2 is better than the clock source 1, and the master device 2 releases a clock source declaration to the master device 1, the secondary device 1, and the secondary device 2. The clock source declaration includes parameters such as a clock source priority, a clock source identifier, and clock source precision. The secondary device 1 and the secondary device 2 determine, based on the clock source declaration sent by the master device 1 and the clock source declaration sent by the master device 2, that the clock source 2 of the master device 2 is an optimal clock source. After determining the optimal clock source, the secondary device 1 and the secondary device 2 perform clock synchronization, and forward the clock source declaration to a downstream device. It should be noted that the secondary device 1 and the secondary device 2 forward only optimal clock source information to the downstream device, and ignore second optimal clock source information.

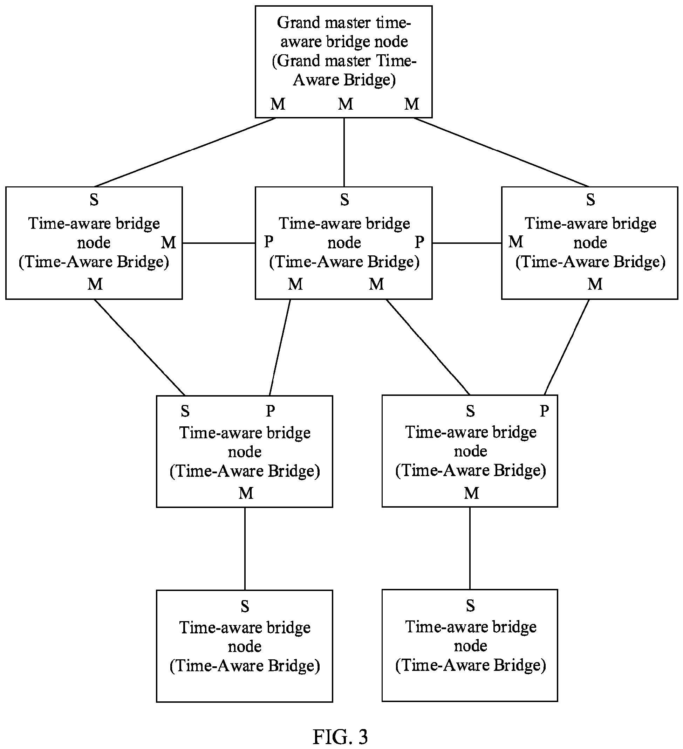

FIG. 3 is a schematic diagram of a clock synchronization spanning tree. A network device determines a status of each port based on a clock source declaration received by each port, so that one clock synchronization spanning tree is formed on an entire network. A status of a port (also referred to as a role of the port) on a device includes the following.

M port (master port, Master Port): The M port is configured to send a clock source declaration and a clock synchronization packet to a downstream device. The clock source declaration indicates clock source information that can be provided. The clock synchronization packet is used by the downstream device to synchronize a clock with a clock source in the clock source declaration.

S port (slave port, Slave Port): The S port is configured to receive a clock source declaration and a clock synchronization packet, and perform clock synchronization.

P port (passive port, Passive Port): The P port does not process a clock synchronization packet.

With reference to FIG. 2 and FIG. 3, the network device receives a clock source declaration from a port and determines that a clock source corresponding to the clock source declaration received by the port is an optimal clock source. The port is determined as an S port, and the network device synchronizes with the optimal clock source from the S port. After the S port is determined, another port is an M port. To be specific, the network device forwards the clock source declaration to another port through the M port, and sends a clock synchronization packet, so that another device can synchronize with the optimal clock source.

When the network device may receive the clock source declaration not only from the S port, but also from another port, the network device sets the another port that can receive the clock source declaration as a P port, to avoid excessive clock source declaration and clock synchronization packet forwarding caused by a loop in a network.

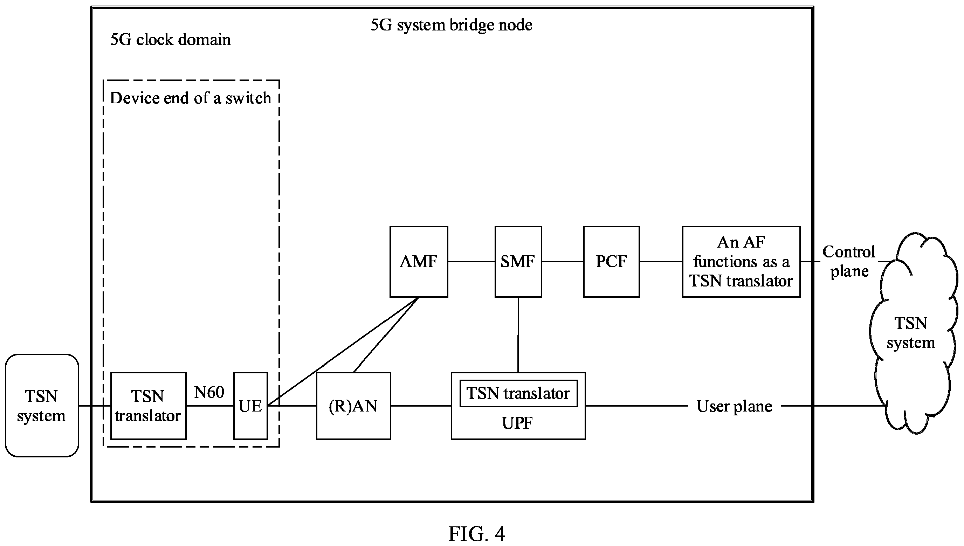

FIG. 4 is a schematic diagram of a system architecture in which a 3GPP network interworks with TSN. A 3GPP 5G system and a TSN translator (TSN Translator) are used as a logical TSN switching node (referred to as a 5G system bridge node) as a whole. FIG. 4 shows only some network elements (that is, the AMF network element, the SMF network element, the PCF network element, the RAN, the UE, the AF network element, and the UPF network element) in the 5G architecture.
(1) On a control plane, the 5G system exchanges information with a node in a TSN system through the TSN translator (that is, the AF network element in 5G) on the control plane. The exchanged information includes switching capability information of the 5G system, TSN configuration information, time scheduling information of a TSN input/output port, time synchronization information, and the like.
(2) On a user plane, the UPF network element in the 5G system receives a downlink TSN flow from the TSN system or sends an uplink TSN flow to the TSN system through the TSN translator. The TSN translator may be integrated into the UPF network element or deployed independently of the UPF network element, and may be referred to as an NW-TT.
(3) On the user plane, the UE in the 5G system receives an uplink TSN flow from the TSN system or sends a downlink TSN flow to the TSN system through the TSN translator. The TSN translator may be integrated into the UE or deployed independently of the UE, and may be referred to as a DS-TT.

The session management network element in this application is a network element that has a function of the SMF network element shown in FIG. 4. For ease of description, the session management network element is referred to as an SMF in subsequent descriptions of this application. It should be noted that, in future communication, the session management network element may still be referred to as an SMF network element, or may have another name. This is not limited in this application. The following SMF in this application may be replaced with a session management network element.

The application function network element in this application is a network element that has a function of the AF network element shown in FIG. 4. For ease of description, the application function network element is referred to as an AF in subsequent descriptions of this application. It should be noted that, in future communication, the application function network element may still be referred to as an AF network element, or may have another name. This is not limited in this application. The following AF in this application may be replaced with an application function network element.

The user plane network element in this application is a network element that has a function of the UPF network element shown in FIG. 4. A TSN translator may be integrated into the user plane network element, or the TSN translator is deployed independently of the user plane network element. For ease of description, in this application, an example in which the TSN translator is integrated into the user plane network element is used for description. For ease of description, the user plane network element is referred to as a UPF in subsequent descriptions of this application. It should be noted that, in future communication, the user plane network element may still be referred to as a UPF network element, or may have another name. This is not limited in this application. The following UPF in this application may be replaced with a user plane network element. It should be noted that functions performed on a user plane network element described subsequently may alternatively be performed on a TSN translator. The TSN translator corresponding to the user plane network element may also be referred to as a network TSN translator (Network TSN Translator, NW-TT). Therefore, UPFs in subsequent embodiments of this application may be partially replaced with NW-TTs, or may be completely replaced with NW-TTs. As an example, receiving a clock source declaration by the UPF may be replaced with receiving a clock source declaration by the NW-TT, forwarding a clock source declaration by the UPF may be replaced with forwarding a clock source declaration by the NW-TT, and the like.

The terminal device in this application is a device that has a function of the UE shown in FIG. 4. A TSN translator may be integrated into the terminal device, or the TSN translator is deployed independently of the terminal device. For ease of description, in this application, an example in which the TSN translator is integrated into the terminal device is used for description. For ease of description, the terminal device is referred to as UE in subsequent descriptions of this application. It should be noted that functions performed on a terminal device described subsequently may alternatively be performed on a TSN translator. The TSN translator corresponding to the terminal device may also be referred to as a device side TSN translator (Device Side TSN Translator, DS-TT). Therefore, UE in subsequent embodiments of this application may be partially replaced with DS-TTs, or may be completely replaced with DS-TTs. As an example, receiving a clock source declaration by the UE may be replaced with receiving a clock source declaration by the DS-TT, forwarding a clock source declaration by the UE may be replaced with forwarding a clock source declaration by the DS-TT, and the like.

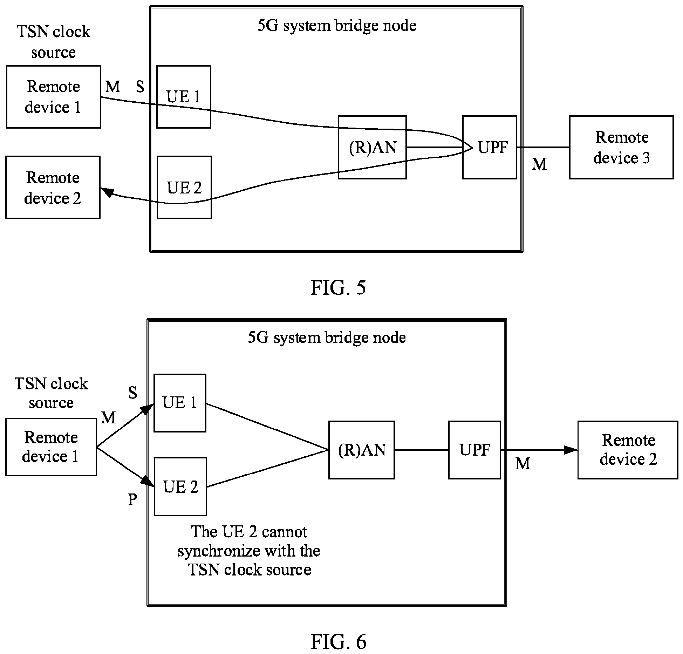

FIG. 5 is a schematic diagram of a clock source on a 3GPP R17 UE side. For example, a TSN clock source is deployed on a UE 1 side. A 5G system receives a clock synchronization packet (forwarded to a UPF through a PDU session of the UE 1) from the clock source on the UE 1 side, and forwards the clock synchronization packet to another user session in clock domain and a DN-side port. For a process of selecting an optimal clock source, a solution in a conventional technology is that each port sends a received clock source declaration to a control plane network element, and the control plane network element delivers, after decision, a port status to a device in which each port is located. For example, in FIG. 5, the UE 1 sends a received clock source declaration to an AF, and the AF delivers, after decision, a port status to the UE 1, UE 2, and the UPF.

The foregoing solution of specifying a port status by using a control plane can implement a process of selecting an optimal clock source and creating a clock synchronization spanning tree. However, a 5G system bridge node is not an independent individual like a physical device, but a virtual node that includes separate devices. Therefore, when a loop occurs on a topology on a UE side, a port status determined based on a definition of 1588/802.1AS may cause the UE to fail to synchronize with an external clock.

FIG. 6 is an example of clock synchronization. It is assumed that UE 1 first receives a clock source declaration from a remote device 1 and reports the clock source declaration. In this case, the UE 1 is determined as an S port, and UE 2 and a UPF are determined as M ports. When the UE 2 subsequently receives a same clock source declaration from the remote device 1, the UE 2 is determined as a P port (that is, the M port is updated to the P port). Based on a definition, the UE 2 does not synchronize a clock from the remote device 1. Consequently, the UE 2 cannot synchronize with an external TSN clock source. In addition, according to the control plane solution, if a link of the UE 1 in FIG. 6 is faulty, because the UE 2 cannot synchronize the TSN clock source, a synchronization clock of a link in which the UE 2 is located cannot be switched to, that is, reliability of clock synchronization cannot be ensured.

Therefore, problems that need to be resolved in embodiments of this application include the following.

First, when there is a clock source on a UE side, how does a 5G system determine an optimal clock source and a status of each port in each 5G system to enable each port in the 5G system to synchronize with an external TSN clock source to ensure reliability of clock synchronization?

Second, when UE that receives a clock synchronization packet in a 5G system is abnormal, how to switch a path to ensure smooth clock synchronization to ensure reliability of clock synchronization?

It should be noted that, in this embodiment of this application, that a port status of UE is a slave (Slave) state may also be understood as that the UE is an S port, or the UE is configured as an S port, or a port of the UE is configured as an S port, or the UE has a function or a capability of an S port. That a port status of UE is a passive (Passive) state may also be understood as that the UE is a P port, or the UE is configured as a P port, or a port of the UE is configured as a P port, or the UE has a function or a capability of a P port. That a port status of UE is a master (Master) port state may also be understood as that the UE is an M port, or the UE is configured as an M port, or a port of the UE is configured as an M port, or the UE has a function or a capability of an M port.

It should be noted that, in this embodiment of this application, when the port status of the UE is a slave state, a control plane network element (for example, an SMF) may configure, for the UPF, a port status corresponding to a session of the UE as a slave state (which is alternatively understood as configuring a port corresponding to the session of the UE as an S port). When the port status of the UE is a passive state, a control plane network element (for example, an SMF) may configure, for the UPF, a port status corresponding to a session of the UE as a passive state (which is alternatively understood as configuring a port corresponding to the session of the UE as a P port).

It should be noted that, an operation that can be performed by UE whose port status is a slave state in this embodiment of this application may be the same as or different from an operation that can be performed by UE whose port status is a slave state in a conventional technology, which is described in the following embodiments. An operation that can be performed by UE whose port status is a passive state in this embodiment of this application may be the same as or different from an operation that can be performed by UE whose port status is a passive state in the conventional technology, which is described in the following embodiments.

With reference to the accompanying drawings, the following describes a plurality of implementation solutions provided in embodiments of this application, to ensure reliability of synchronization of a 5G system with an external clock source.

Implementation solution 1: Aplurality of UEs in the 5G system may all receive a clock source declaration from a same remote device, and may all forward the clock source declaration to a UPF. When receiving a plurality of same clock source declarations, the UPF forwards only one of the clock source declarations. In addition, when UE that currently sends a clock source declaration to the UPF cannot continue to send the clock source declaration to the UPF, the UPF may forward a clock source declaration received from other UE.

It should be noted that a manner of sending a clock synchronization packet is similar to a manner of sending a clock source declaration, but an operation of processing a clock synchronization packet received from the UE 1 or the UE 2 needs to be added on the UPF, to ensure that time information in the clock synchronization packet is accurate. For ease of description, the following uses a manner of sending a clock source declaration as an example for description.

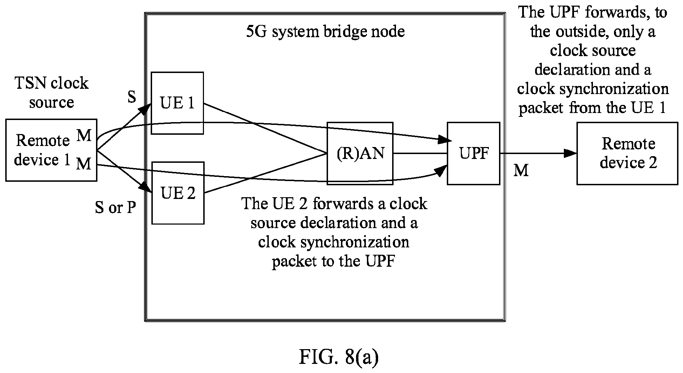

The following provides detailed descriptions with reference to FIG. 6 and FIG. 8(a). FIG. 6 shows a conventional technology solution, and FIG. 8(a) shows an improved solution according to the implementation solution 1. An example in which the 5G system includes UE 1 and UE 2 is used for description. According to the solution 1, the UE 1 is configured as an S port, and the UE 2 is configured as an S port or a P port.

For example, both the UE 1 and the UE 2 can receive a same clock source declaration from the remote device 1. In this case, both the UE 1 and the UE 2 may send, to the UPF, the clock source declaration received from the remote device. If the UPF first receives the clock source declaration from the UE 1, the UPF may forward only the clock source declaration received from the UE 1, and does not forward the clock source declaration received from the UE 2. Subsequently, if the UE 1 is abnormal (for example, is faulty or goes offline), or a user plane path between the UE 1 and the UPF is faulty, or a control plane determines that load of the UE 1 is heavy, or the UE 1 cannot receive the clock source declaration from the remote device within specified duration, the UPF cannot receive the clock source declaration from the UE 1 within specified duration, and the UPF determines to forward the clock source declaration and a clock synchronization packet that are received from the UE 2.

It should be noted that, that the UPF forwards the clock source declaration from the UE 1 or the UE 2 may be: The UPF forwards the clock source declaration from the UE 1 or the UE 2 through a port of the UPF; or the UPF sends the clock source declaration from the UE 1 or the UE 2 to UE (for example, UE 3 or UE 4) in a master port state, and then the UE in the master port state forwards the clock source declaration from the UE 1 or the UE 2 to the outside.

Optionally, the UE (for example, the UE 1 or the UE 2 in FIG. 6) in the 5G system may perform clock synchronization based on the clock source declaration and the clock synchronization packet that are received from the remote device.

Optionally, the UE (for example, the UE 2 in FIG. 6) in the 5G system may perform clock synchronization based on the clock source declaration and the clock synchronization packet that are received from the UPF. In other words, the UPF sends the clock source declaration and the clock synchronization packet that are received from the UE 1 to the UE 2, so that the UE 2 may perform clock synchronization based on the received clock source declaration and the received clock synchronization packet.

According to the foregoing solution 1, in one aspect, the UPF forwards only one of a plurality of received clock source declarations each time, rather than all received clock source declarations, so that overheads can be reduced and decision overheads of a clock source declaration receiver can be reduced. In another aspect, when the UPF cannot forward a clock source declaration due to an exception in receiving the clock source declaration, the UPF may switch to forwarding a clock source declaration of other UE. This can ensure reliability of clock synchronization. In addition, in the foregoing solution, all UEs in the 5G system can perform synchronization. This implements reliability of clock synchronization.

Implementation solution 2: Aplurality of UEs in the 5G system may all receive a clock source declaration from a same remote device, and only one of the UEs forwards the clock source declaration to a UPF. The UPF receives the clock source declaration from one UE, forwards the clock source declaration received from the UE, and sends the received clock source declaration to other UE in the 5G system. In addition, when UE that currently sends a clock source declaration to the UPF cannot continue to send the clock source declaration to the UPF, other UE sends a clock source declaration to the UPF, so that the UPF can forward the clock source declaration received from other UE.

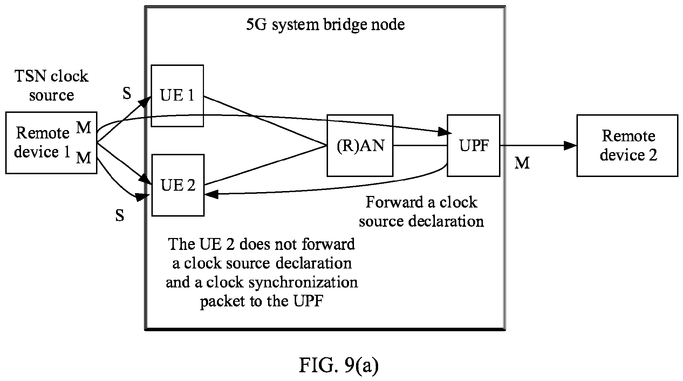

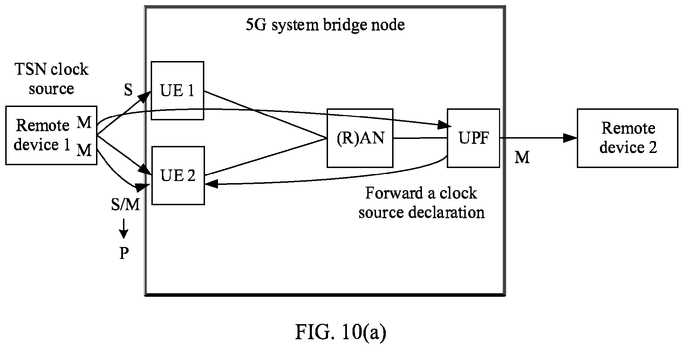

The following provides detailed descriptions with reference to FIG. 6, FIG. 9(a), and FIG. 10(a). FIG. 6 shows the conventional technology solution, and FIG. 9(a) and FIG. 10(a) show improved solutions according to the implementation solution 2. An example in which the 5G system includes UE 1 and UE 2 is used for description. According to the solution 2, the UE 1 is configured as an S port, and the UE 2 is configured as an S port (based on FIG. 9(a)) or a P port (based on FIG. 10(a)).

For example, both the UE 1 and the UE 2 can receive a same clock source declaration from the remote device 1. In this case, both the UE 1 and the UE 2 may send, to the UPF, the clock source declaration received from the remote device. If the UPF first receives the clock source declaration from the UE 1, the UPF may forward only the clock source declaration received from the UE 1, and does not forward the clock source declaration received from the UE 2. In addition, the UPF further sends, to the UE 2, the clock source declaration received from the UE 1. When the UE 2 receives the clock source declaration from the UPF, the UE 2 stops sending, to the UPF, the clock source declaration received from the remote device 1. In other words, the UE 2 may receive the clock source declaration from the remote device 1, and may receive the clock source declaration from the UPF (where the clock source declaration is from the remote device 1, and is sent to the UPF through the UE 1). The UE 2 determines that the clock source declaration received from the remote device 1 is the same as the clock source declaration received from the UPF, and the UE 2 does not send the clock source declaration received from the remote device 1 to the UPF. Subsequently, if the UE 1 is abnormal (for example, is faulty or goes offline), or a user plane path between the UE 1 and the UPF is faulty, or a control plane determines that load of the UE 1 is heavy, or the UE 1 cannot receive the clock source declaration from the remote device within specified duration, the UPF cannot receive the clock source declaration from the UE 1 within specified duration, and consequently the UPF cannot send the clock source declaration to the UE 2. When the UE 2 determines that the clock source declaration from the UPF is not received within specified duration, the UE 2 may send, to the UPF, the clock source declaration received from the remote device 1, so that the UPF can receive the clock source declaration from the UE 2, and the UPF can forward the clock source declaration from the UE 2. In other words, when the UPF cannot receive the clock source declaration from the UE 1, the UPF may switch to receiving the clock source declaration from the UE 2.

It should be noted that, that the UPF forwards the clock source declaration from the UE 1 or the UE 2 may be: The UPF forwards the clock source declaration from the UE 1 or the UE 2 through a port of the UPF; or the UPF sends the clock source declaration from the UE 1 or the UE 2 to UE (for example, UE 3 or UE 4) in a master port state, and then the UE in the master port state forwards the clock source declaration from the UE 1 or the UE 2 to the outside.

Optionally, the UE (for example, the UE 1 or the UE 2 in FIG. 6) in the 5G system may perform clock synchronization based on the clock source declaration and the clock synchronization packet that are received from the remote device.

Optionally, the UE (for example, the UE 2 in FIG. 6) in the 5G system may perform clock synchronization based on the clock source declaration and the clock synchronization packet that are received from the UPF. In other words, the UPF sends the clock source declaration and the clock synchronization packet that are received from the UE 1 to the UE 2, so that the UE 2 may perform clock synchronization based on the received clock source declaration and the received clock synchronization packet.

According to the foregoing solution 2, in one aspect, the UPF receives a clock source declaration from only one UE, so that the UPF forwards only the clock source declaration from the UE, and overheads can be reduced and decision overheads of a clock source declaration receiver can be reduced. In another aspect, when the UPF cannot forward a clock source declaration due to an exception in receiving the clock source declaration, the UPF may switch to forwarding a clock source declaration of other UE. This can ensure reliability of clock synchronization. In addition, in the foregoing solution, all UEs in the 5G system can perform synchronization. This implements reliability of clock synchronization.

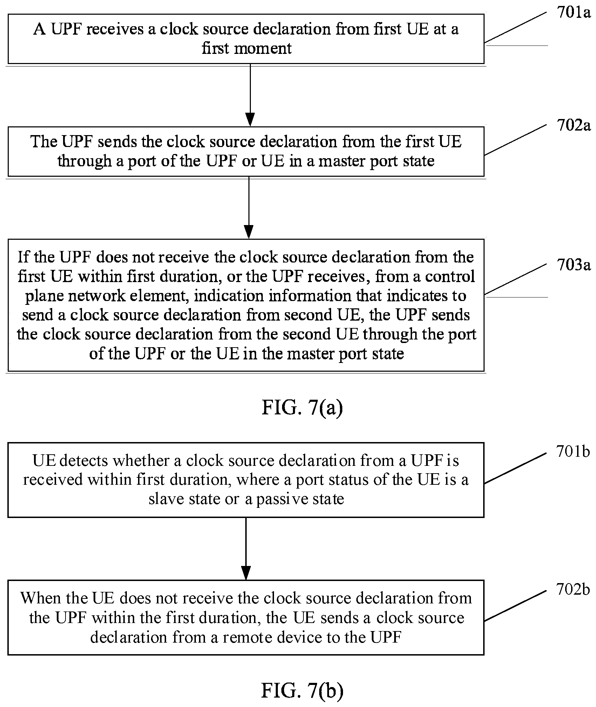

According to the foregoing implementation solution 1 or implementation solution 2, embodiments of this application may provide the following UPF-side communication method. As shown in FIG. 7(a), the method includes the following steps.

Step 701a: AUPF receives a clock source declaration from first UE at a first moment.

Step 702a: The UPF sends the clock source declaration from the first UE through a port of the UPF or UE in a master port state.

Step 703a: If the UPF does not receive the clock source declaration from the first UE within first duration, or the UPF receives, from a control plane network element, indication information that indicates to send a clock source declaration from second UE, the UPF sends the clock source declaration from the second UE through the port of the UPF or the UE in the master port state, where the first duration is later than the first moment, where a clock source corresponding to the clock source declaration from the first UE is the same as a clock source corresponding to the clock source declaration from the second UE.

Optionally, the first duration is preconfigured, or is configured by the control plane network element.

Optionally, if the UPF sends the clock source declaration from the first UE through the port of the UPF or the UE in the master port state, the UPF may further send the clock source declaration from the first UE to the second UE.

The first UE and the second UE may respectively be, for example, the UE 1 and the UE 2 in FIG. 8(a), FIG. 9(a), or FIG. 10(a).

According to the foregoing solution, the UPF first forwards the clock source declaration from the first UE. When the UPF cannot receive the clock source declaration from the first UE within the first duration, or the UPF receives, from the control plane network element, the indication information that indicates to send the clock source declaration from the second UE, the UPF determines to switch to forwarding the clock source declaration from the second UE. It should be noted that before the switching, the UPF may be able to receive the clock source declaration from the second UE (as shown in the example in FIG. 8(a)), or may not be able to receive the clock source declaration from the second UE (as shown in the example in FIG. 9(a) or FIG. 10(a)). However, after the switching, the UPF may receive the clock source declaration from the second UE, and the UPF forwards the clock source declaration received from the second UE. According to this solution, this can ensure that a 5G system can synchronize with an external clock source, and ensure reliability of clock synchronization.

In an implementation method, before step 702a, if the UPF can receive both the clock source declaration from the first UE and the clock source declaration from the second UE, the UPF determines that the clock source declaration from the first UE is the same as the clock source declaration from the second UE, and determines to send the clock source declaration from the first UE. For example, the first UE first sends the clock source declaration to the UPF, so that the UPF forwards the clock source declaration from the first UE. For another example, the UPF determines that load of the first UE is light. Therefore, the UPF forwards the clock source declaration from the first UE.

In another implementation method, before step 702a, if the UPF can receive both the clock source declaration from the first UE and the clock source declaration from the second UE, the UPF may receive configuration information from the control plane network element. The configuration information is for configuring the UPF to send the clock source declaration from the first UE. In other words, the control plane network element notifies the UPF to forward the clock source declaration from the first UE.

In an implementation method, when the UPF does not receive the clock source declaration from the first UE within the first duration, the UPF may send indication information to the control plane network element. The indication information indicates that the clock source declaration from the first UE is not received within the first duration, to trigger the control plane network element to determine that the UPF forwards the clock source declaration from the second UE. Therefore, the control plane network element may send, to the UPF, the indication information that indicates the UPF to send the clock source declaration from the second UE, and/or send, to the second UE, indication information that indicates the second UE to send the clock source declaration to the UPF (where based on the example in FIG. 9(a) or FIG. 10(a), after receiving the indication information, the UE 2 starts to send the clock source declaration to the UPF).

In an implementation method, when the UPF does not receive the clock source declaration from the first UE within the first duration, the UPF may determine to send the clock source declaration from the second UE, and send notification information to the control plane network element. The notification information indicates that the UPF sends the clock source declaration from the second UE.

According to the foregoing implementation solution 2, embodiments of this application may provide the following UE-side communication method. As shown in FIG. 7(b), the method includes the following steps.

Step 701b: UE detects whether a clock source declaration from a UPF is received within first duration, where a port status of the UE is a slave state or a passive state.

Step 702b: When the UE does not receive the clock source declaration from the UPF within the first duration, the UE sends a clock source declaration from a remote device to the UPF.

The UE herein may be, for example, the UE 2 in FIG. 9(a) or FIG. 10(a).

According to this solution, when the UE does not receive the clock source declaration from the UPF within the first duration, it indicates that the UPF cannot receive a clock source declaration from other UE. Therefore, the UE may send the clock source declaration of the remote device to the UPF, to ensure that the UPF can synchronize with a clock source from the remote device and can forward a clock source declaration, and ensure reliability of synchronization of a 5G system with an external clock source.

In an implementation method, before step 701b, the UE may receive configuration information from a control plane network element. The configuration information is for configuring the port status of the UE to the slave state or the passive state. Alternatively, it is understood that the control plane network element configures a port of the UE as an S port or a P port. Alternatively, in another implementation method, before step 701b, the UE determines that a clock source corresponding to the clock source declaration from the UPF is the same as a clock source corresponding to the clock source declaration from the remote device, and determines that the port status of the UE is the slave state or the passive state. In other words, the port status of the UE may be configured by the control plane network element, or the port status of the UE may be determined by the UE.

In an implementation method, the UE may perform clock synchronization based on a received clock synchronization packet from the remote device. Alternatively, in another implementation method, the UE may perform clock synchronization based on a received clock synchronization packet from the user plane.

In an implementation method, when the port status of the UE is a passive state, and the UE does not receive the clock source declaration from the UPF within the first duration, it indicates that the UPF cannot receive the clock source declaration from other UE, and the UE may determine that the port status of the UE is a slave state. Then, after the port status is modified to the slave state, the clock source declaration received from the remote device may be sent to the UPF, to ensure that the UPF can receive the clock source declaration, and improve reliability of clock source declaration synchronization.

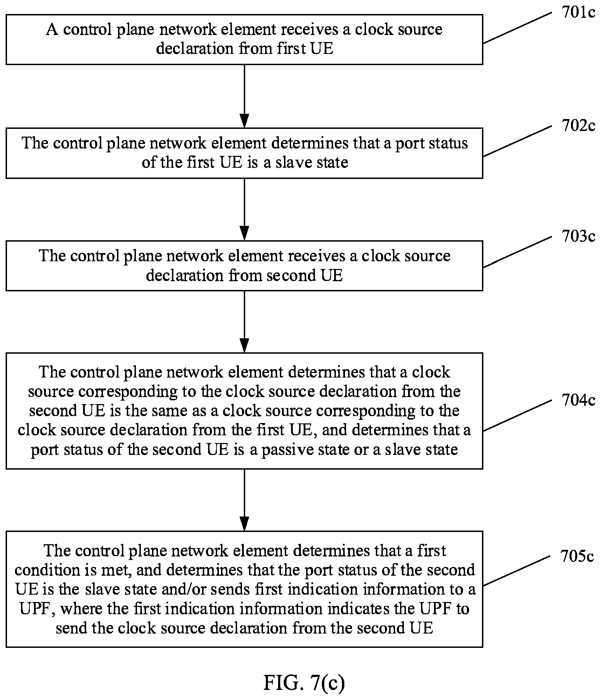

According to the foregoing implementation solution 1 or implementation solution 2, embodiments of this application may provide the following control plane network element-side (for example, the control plane network element may be an SMF, an NEF, or an AF) communication method. As shown in FIG. 7(c), the method includes the following steps.

Step 701c: A control plane network element receives a clock source declaration from first UE.

Step 702c: The control plane network element determines that a port status of the first UE is a slave state.

Alternatively, it is understood that the first UE is configured as an Sport.

Step 703c: The control plane network element receives a clock source declaration from second UE.

Step 704c: The control plane network element determines that a clock source corresponding to the clock source declaration from the second UE is the same as a clock source corresponding to the clock source declaration from the first UE, and determines that a port status of the second UE is a passive state or a slave state.

Alternatively, it is understood that the second UE is configured as a P port or an Sport.

Step 705c: The control plane network element determines that a first condition is met, and determines that the port status of the second UE is the slave state and/or sends first indication information to a UPF, where the first indication information indicates the UPF to send the clock source declaration from the second UE.

The first UE and the second UE may respectively be, for example, the UE 1 and the UE 2 in FIG. 8(a), FIG. 9(a), or FIG. 10(a).

According to the foregoing solution, the control plane network element configures a port status of each UE in a 5G system. The port status of the first UE is configured as a slave state, and the UPF forwards the clock source declaration from the first UE. The port status of the second UE is configured as a slave state or a passive state, and the UPF does not forward the clock source declaration from the second UE. Subsequently, when the control plane determines that the first condition is met, the control plane network element determines that the first UE cannot send the clock source declaration to the UPF. Therefore, the UPF cannot forward a clock source from the first UE. In this case, the control plane network element may perform the following operation (a) and/or operation (b).

Operation (a): When the port status of the second UE is a passive state, the control plane network element adjusts the port status of the second UE to a slave state, so that the second UE may send the clock source declaration to the UPF.

Operation (b): The control plane network element sends indication information (which may be referred to as the first indication information) to the UPF, where the indication information indicates the UPF to send the clock source declaration from the second UE.

In an implementation method, that the control plane network element determines that the first condition is met includes one or more of the following.

(1) The control plane network element receives indication information (which may be referred to as second indication information) from the UPF, where the indication information indicates that the UPF does not receive the clock source declaration from the first UE within first duration.

In other words, when the UPF does not receive the clock source declaration from the first UE within the first duration, the UPF reports, to the control plane network element, the indication information that indicates that the clock source declaration from the first UE is not received within the first duration, so that the control plane network element determines that the first condition is met, and the control plane network element is triggered to determine to notify the UPF to forward the clock source declaration from the second UE.

(2) The control plane network element receives indication information (which may be referred to as third indication information) from the first UE, where the indication information indicates that the first UE does not receive a clock source declaration from a remote device within second duration.

In other words, when the first UE does not receive the clock source declaration from the remote device within the second duration, the first UE reports, to the control plane network element, the indication information that indicates that the clock source declaration from the remote device is not received within the second duration, so that the control plane network element determines that the first condition is met, and the control plane network element is triggered to determine to notify the UPF to forward the clock source declaration from the second UE.

(3) The control plane network element determines that the first UE is abnormal.

In other words, when the control plane network element determines that the first UE is abnormal (where if the control plane network element is an SMF, the SMF may detect that the first UE is abnormal, or if the control plane network element is an AF or an NEF, an SMF may detect that the first UE is abnormal and report the exception to the AF or the NEF), so that the control plane network element determines that the first condition is met, and the control plane network element is triggered to determine to notify the UPF to forward the clock source declaration from the second UE.

(4) The control plane network element receives indication information (which may be referred to as fourth indication information) from the second UE, where the indication information indicates that the second UE does not receive a clock source declaration from the UPF within third duration.

In other words, when the second UE does not receive the clock source declaration from the UPF within the third duration, it indicates that the UPF may not receive the clock source declaration from the first UE. Therefore, the second UE reports, to the control plane network element, the indication information that indicates that the clock source declaration from the UPF is not received within the third duration, so that the control plane network element determines that the first condition is met, and the control plane network element is triggered to determine to notify the UPF to forward the clock source declaration from the second UE.

The foregoing (1) to (4) are all specific implementations in which the control plane network element determines that the first condition is met. After the control plane network element determines that the first condition is met, the control plane network element is triggered to determine to notify the UPF to forward the clock source declaration from the second UE.

In another implementation method, alternatively, the UPF determines that the clock source declaration from the first UE is not received within specified duration (for example, the first duration), and the UPF determines to forward the clock source declaration from the second UE. Further, the UPF may further report, to the control plane network element, notification information that indicates that the UPF sends the clock source declaration from the second UE.

With reference to a specific example, the following describes embodiments of the foregoing implementation solution 1 and implementation solution 2. The following Embodiment 1 describes the foregoing implementation solution 1 in detail with reference to a specific example, and the following Embodiments 2 and 3 describe the foregoing implementation solution 2 in detail with reference to specific examples. UE 2 in Embodiment 2 is configured as an S port, and UE 2 in Embodiment 3 is configured as a P port.

It should be noted that the following Embodiment 1 to Embodiment 3 provide more detailed descriptions than those in the foregoing implementation solution 1 and implementation solution 2.

### Embodiment 1

FIG. 8(a) is a diagram of an example of clock source synchronization. In this example, a TSN clock source is deployed on a network connected to UE 1 and UE 2, and the UE 1, the UE 2, and the connected network form a loop (which is simplified as that both the UE 1 and the UE 2 are connected to a remote device in the figure). The UE 2 is determined as an S port or a P port, and forwards a clock source declaration and a clock synchronization packet to a UPF.

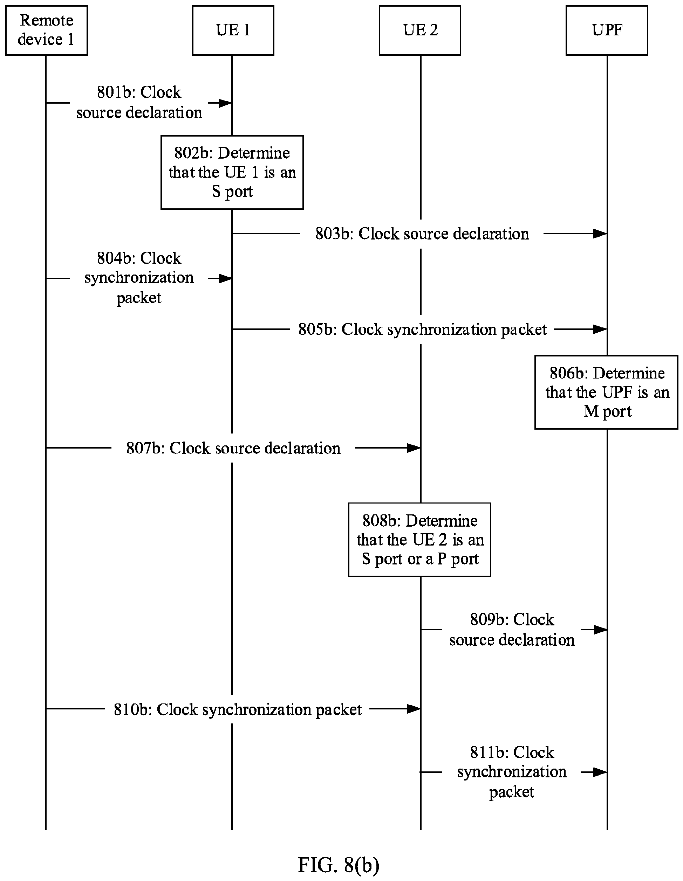

Based on the example shown in FIG. 8(a), this embodiment of this application provides a communication method. In the method, a port status of each device in a 5G system is determined on a user plane. As shown in FIG. 8(b), the communication method includes the following steps.

Step 801b: A remote device 1 sends a clock source declaration to the UE 1. Correspondingly, the UE 1 receives the clock source declaration.

Step 802b: The UE 1 determines that the UE 1 is an Sport.

The UE 1 determines that no other clock source declaration is received from the UPF, and determines that the UE 1 is the S port. Alternatively, the UE 1 receives another clock source declaration from the UPF, but determines that a TSN clock source corresponding to the clock source declaration received from the remote device on the UE 1 side is better than a TSN clock source corresponding to the clock source declaration received from the UPF. In this case, the UE 1 determines that the TSN clock source corresponding to the clock source declaration received from the remote device side is an optimal clock source, and determines that the UE 1 is the Sport.

Step 803b: The UE 1 sends the clock source declaration to the UPF. Correspondingly, the UPF receives the clock source declaration.

In other words, the UE 1 forwards, to the UPF, the clock source declaration received from the remote device 1.

Step 804b: The remote device 1 sends a clock synchronization packet to the UE 1. Correspondingly, the UE 1 receives the clock synchronization packet.

The UE 1 performs clock synchronization with the TSN clock source based on the clock synchronization packet.

Step 805b: The UE 1 sends the clock synchronization packet to the UPF. Correspondingly, the UPF receives the clock synchronization packet.

In other words, the UE 1 forwards, to the UPF, the clock synchronization packet received from the remote device 1.

The UPF performs clock synchronization with the TSN clock source based on the clock synchronization packet.

Step 806b: The UPF determines that the UPF is an M port.

The UPF determines that no other clock source declaration is received from a remote device 2, and determines that the UPF is the M port. Alternatively, the UPF receives another clock source declaration from the remote device 2, but determines that a TSN clock source corresponding to the clock source declaration received from the UE 1 side is better than a TSN clock source corresponding to the clock source declaration received from the remote device 2. In this case, the UPF determines that the TSN clock source corresponding to the clock source declaration received from the UE 1 side is an optimal clock source, and determines that the UPF is the M port.

Therefore, the UPF may send the clock source declaration from the UE 1 to the remote device 2, process the clock synchronization packet from the UE 1, and send the processed clock synchronization packet to the remote device 2.

It should be noted that step 806b may be performed in any step after step 803b and before step 809b.

Step 807b: The remote device 1 sends a clock source declaration to the UE 2. Correspondingly, the UE 2 receives the clock source declaration.

Step 808b: The UE 2 determines that the UE 2 is an S port or a P port.

The UE 2 determines that no other clock source declaration is received from the UPF, and determines that the UE 2 is the S port or the P port. Alternatively, the UE 2 receives the clock source declaration that is from the UE 1 and that is sent by the UPF, and determines that the clock source declaration received from the UPF side is the same as the clock source declaration received from the remote device 1, and the UE 2 determines that the UE 2 is the S port or the P port.

Step 809b: The UE 2 sends the clock source declaration to the UPF. Correspondingly, the UPF receives the clock source declaration.

In other words, the UE 2 forwards, to the UPF, the clock source declaration received from the remote device 1.

Step 810b: The remote device 1 sends a clock synchronization packet to the UE 2. Correspondingly, the UE 2 receives the clock synchronization packet.

The UE 2 performs clock synchronization with the TSN clock source based on the clock synchronization packet.

Step 811b: The UE 2 sends the clock synchronization packet to the UPF. Correspondingly, the UPF receives the clock synchronization packet.

In other words, the UE 2 forwards, to the UPF, the clock synchronization packet received from the remote device 1.

The UPF determines that the clock source declaration received from the UE 1 is the same as the clock source declaration received from the UE 2, and the UPF does not process the clock synchronization packet after receiving the clock synchronization packet from the UE 2.

Optionally, the UPF determines that a port corresponding to a session of the UE 2 is an S port or a P port.

It should be noted that when the UE 1 is abnormal, for example, has a link fault or goes offline, the UPF may forward the clock source declaration from the UE 2 to another device, and process the clock synchronization packet from the UE 2. If in the foregoing step 811b, the UPF determines that the port corresponding to the session of the UE 2 is the P port, the UPF further needs to change the P port to an Sport.

According to this solution, both the UE 1 and the UE 2 receive and process a clock source declaration and a clock synchronization packet from a remote device, and synchronize with an external TSN clock source. In addition, the UPF processes only the clock synchronization packet from the UE 1. According to this solution, a plurality of UEs in a 5G system all can implement clock synchronization with an external TSN clock source. In addition, when one of the UEs cannot synchronize with the clock source due to a link fault, other UEs may be switched to for clock source synchronization, to ensure reliability of synchronization of a 5G system bridge node with an external TSN clock source.

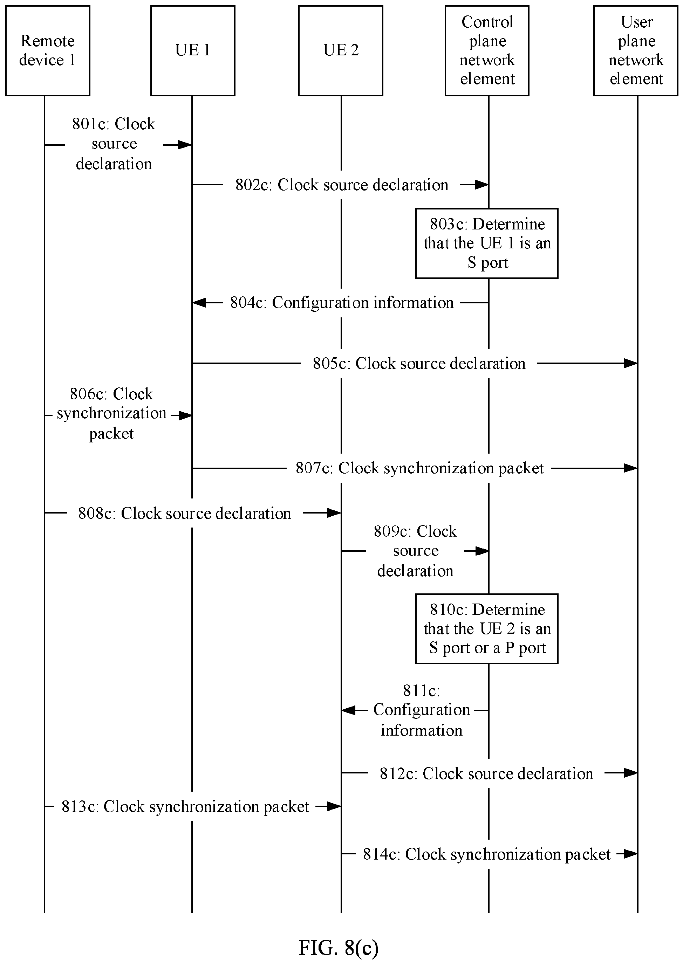

Based on the example shown in FIG. 8(a), this embodiment of this application provides a communication method. In the method, a port status of each device in a 5G system is determined on a control plane. As shown in FIG. 8(c), the communication method includes the following steps.

Step 801c: A remote device 1 sends a clock source declaration to the UE 1. Correspondingly, the UE 1 receives the clock source declaration.

Step 802c: The UE 1 sends the clock source declaration to a control plane network element. Correspondingly, the control plane network element receives the clock source declaration.

In other words, the UE 1 forwards, to the control plane network element, the clock source declaration received from the remote device 1.

The control plane network element may be an AF, an NEF, an SMF, or the like.

Step 803c: The control plane network element determines that the UE 1 is an Sport.

The control plane network element determines that a TSN clock source corresponding to the clock source declaration received from the UE 1 is an optimal clock source received by the 5G system, and determines that the UE 1 is the Sport.

Step 804c: The control plane network element sends configuration information to the UE 1. Correspondingly, the UE 1 receives the configuration information.

The configuration information is for configuring the UE 1 as the Sport.

In the foregoing solution, the UE 1 sends the clock source declaration to the control plane network element. In another implementation solution, the UE 1 may send the clock source declaration to a UPF, and then the UPF sends the clock source declaration to the control plane network element. Then, the control plane network element performs step 803c and step 804c.

Optionally, the control plane network element may further configure, for the UPF, a port status corresponding to a session of the UE 1 as an S port. A configuration manner may be configuring a port status, or may be configuring a packet processing rule. For example, the UPF is configured to receive a clock source declaration from the session of the UE 1, and send the clock source declaration to another session and/or an N6-side port in clock domain in broadcast or multicast mode. If the control plane network element is an AF, an NEF, or the like, the control plane network element may send the configuration information to the UPF by using bridge configuration; or when the control plane network element configures a port status of the UE 1 to the SMF, the SMF configures the port status to the UPF, or generates a packet processing rule and configures the packet processing rule to the UPF, or the AF/NEF triggers a packet processing rule creation process, and creates a packet processing rule on the UPF by using the SMF. In this application, when a control plane network element needs to configure, for a UPF, a port status corresponding to a session of UE 1 or UE 2, one or more methods described herein may be used, and details are not described subsequently.

Optionally, the control plane network element may further configure the UPF as an M port.

Step 805c: The UE 1 sends the clock source declaration to the UPF. Correspondingly, the UPF receives the clock source declaration.

The UPF receives the clock source declaration from the UE 1, determines that the TSN clock source corresponding to the clock source declaration is an optimal clock source, and may forward the clock source declaration to another device. Alternatively, the UPF forwards a clock source declaration according to a configured packet processing rule.

Step 806c: The remote device 1 sends a clock synchronization packet to the UE 1. Correspondingly, the UE 1 receives the clock synchronization packet.

The UE 1 performs clock synchronization with the TSN clock source based on the clock synchronization packet.

Step 807c: The UE 1 sends the clock synchronization packet to the UPF. Correspondingly, the UPF receives the clock synchronization packet.

In other words, the UE 1 forwards, to the UPF, the clock synchronization packet received from the remote device 1.

The UPF performs clock synchronization with the TSN clock source based on the clock synchronization packet.

Step 808c: The remote device 1 sends a clock source declaration to the UE 2. Correspondingly, the UE 2 receives the clock source declaration.

Step 809c: The UE 2 sends the clock source declaration to the control plane network element. Correspondingly, the control plane network element receives the clock source declaration.

In other words, the UE 2 forwards, to the control plane network element, the clock source declaration received from the remote device 1.

Step 810c: The control plane network element determines that the UE 2 is an S port or a P port.

The control plane network element determines that a TSN clock source corresponding to the clock source declaration received from the UE 2 is the same as the TSN clock source corresponding to the clock source declaration received from the UE 1, but the TSN clock source corresponding to the clock source declaration received from the UE 2 is from a UE side, and determines that the UE 2 is the S port or the P port.

Step 811c: The control plane network element sends configuration information to the UE 2. Correspondingly, the UE 2 receives the configuration information.

The configuration information is for configuring the UE 2 as the S port or the P port.

In the foregoing solution, the UE 2 sends the clock source declaration to the control plane network element. In another implementation solution, the UE 2 may send the clock source declaration to the UPF, and then the UPF sends the clock source declaration to the control plane network element. Then, the control plane network element performs step 810c and step 811c.

Optionally, the control plane network element may further configure, for the UPF, a port status corresponding to a session of the UE 2 as an S port or a P port.

Step 812c: The UE 2 sends the clock source declaration to the UPF. Correspondingly, the UPF receives the clock source declaration.

The UPF receives the clock source declaration from the UE 2. If a port corresponding to the session corresponding to the UE 2 on the UPF is configured as an S port, the UPF determines that the TSN clock source corresponding to the clock source declaration from the UE 2 is the same as the TSN clock source corresponding to the clock source declaration received from the UE 1, and the UPF determines to forward the clock source declaration from the UE 1 to another device and process the clock synchronization packet from the UE 1. If the port corresponding to the session corresponding to the UE 2 is configured as a P port, the UPF directly determines to forward the clock source declaration from the UE 1 to another device and process the clock synchronization packet from the UE 1.

Step 813c: The remote device 1 sends a clock synchronization packet to the UE 2. Correspondingly, the UE 2 receives the clock synchronization packet.

The UE 2 performs clock synchronization with the TSN clock source based on the clock synchronization packet.

Step 814c: The UE 2 sends the clock synchronization packet to the UPF. Correspondingly, the UPF receives the clock synchronization packet.

In other words, the UE 2 forwards, to the UPF, the clock synchronization packet received from the remote device 1.

The UPF determines that the clock source declaration received from the UE 1 is the same as the clock source declaration received from the UE 2, and the UPF does not process the clock synchronization packet after receiving the clock synchronization packet from the UE 2.

It should be noted that, when the UE 1 is abnormal, the control plane network element determines that the UE 1 goes offline (for example, the control plane network element is an SMF, and the SMF may detect that the UE 1 goes offline; for another example, the control plane network element is an AF/NEF, and an SMF reports that the UE 1 goes offline to the AF/NEF when detecting that the UE 1 goes offline), or receives indication information from the UPF, where the indication information indicates that receiving the clock source declaration by the UPF from the UE 1 times out. In this case, the control plane network element notifies the UPF to forward the clock source declaration from the UE 2 to another device and process the clock synchronization packet from the UE 2. Optionally, if the port corresponding to the session corresponding to the UE 2 on the UPF is configured as a P port, the control plane network element may send configuration information to the UPF, to configure the port status corresponding to the session corresponding to the UE 2 on the UPF as an S port. Alternatively, the control plane network element receives indication information from the UE 1, where the indication information indicates that receiving the clock source declaration by the UE 1 from the remote device 1 times out. In this case, the control plane network element notifies the UPF to forward the clock source declaration from the UE 2 to another device and process the clock synchronization packet from the UE 2. Optionally, the control plane network element configures timeout duration for the UPF/UE 1, so that when receiving the clock source declaration times out, the UPF/UE 1 reports the timeout to the control plane network element.

In another implementation method, in the control plane solution, an exception processing method in the user plane solution in the embodiment in FIG. 8(b) may also be applied in exception processing. To be specific, after identifying an exception, the UPF directly switches to forwarding the clock source declaration from the UE 2 and forwarding the clock synchronization packet from the UE 2, without a need of configuration on the control plane.

According to this solution, both the UE 1 and the UE 2 receive and process a clock source declaration and a clock synchronization packet from a remote device, and synchronize with an external TSN clock source. In addition, the UPF processes only the clock synchronization packet from the UE 1. According to this solution, a plurality of UEs in a 5G system all can implement clock synchronization with an external TSN clock source. In addition, when one of the UEs cannot synchronize with the clock source due to a link fault, other UEs may be switched to for clock source synchronization, to ensure reliability of synchronization of a 5G system bridge node with an external TSN clock source.

### Embodiment 2

FIG. 9(a) is a diagram of another example of clock source synchronization. In this example, a TSN clock source is deployed on a network connected to UE 1 and UE 2, and the UE 1, the UE 2, and the connected network form a loop (which is simplified as that the UE 1 and the UE 2 are connected to a remote device in the figure). The UE 2 is determined as an S port, and does not forward a clock source declaration and a clock synchronization packet to a UPF.

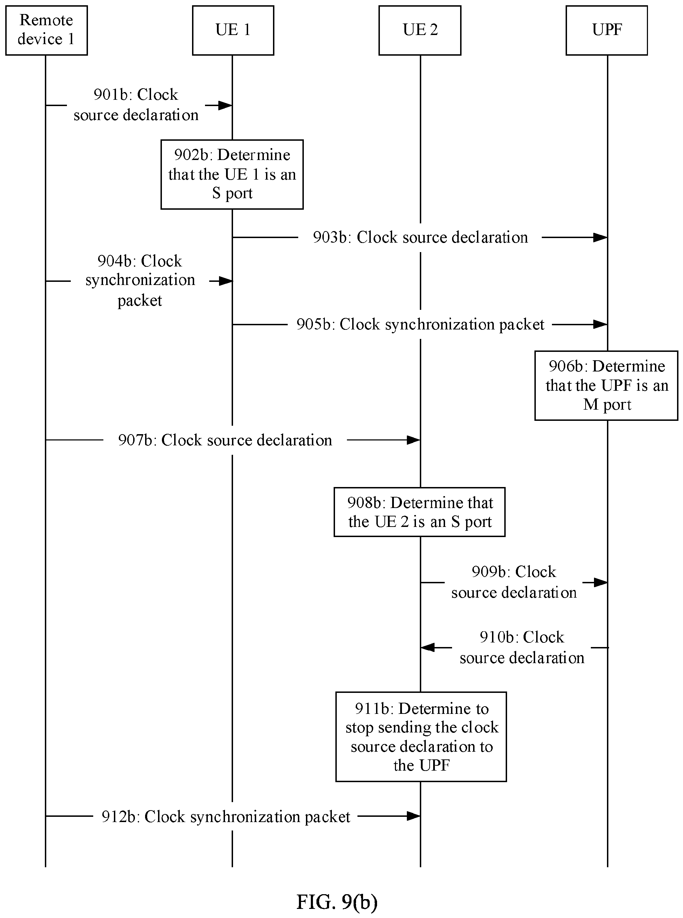

Based on the example shown in FIG. 9(a), this embodiment of this application provides a communication method. In the method, a port status of each device in a 5G system is determined on a user plane. As shown in FIG. 9(b), the communication method includes the following steps.

Step 901b to step 909b are the same as step 801b to step 809b in FIG. 8(b). Refer to the foregoing descriptions.

Step 910b: The UPF sends a clock source declaration to the UE 2. Correspondingly, the UE 2 receives the clock source declaration.

The clock source declaration herein is a clock source declaration received by the UPF from the UE 1.

The UPF determines that the clock source declaration received from the UE 1 is the same as the clock source declaration received from the UE 2, and the UPF still forwards the clock source declaration from the UE 1 to the UE 2. Optionally, the UPF further forwards the clock synchronization packet from the UE 1 to the UE 2.

Step 911b: The UE 2 determines to stop sending the clock source declaration to the UPF.

After receiving the clock source declaration from the UPF, the UE 2 determines that the clock source declaration received by the UE 2 from the UPF is the same as the clock source declaration received from the remote device 1, and the UE 2 determines to stop sending, to the UPF, the clock source declaration and a clock synchronization packet that are received from the remote device 1.

Step 912b: The remote device 1 sends the clock synchronization packet to the UE 2. Correspondingly, the UE 2 receives the clock synchronization packet.

After receiving the clock synchronization packet in this step, the UE 2 does not send the clock synchronization packet to the UPF.

The UE 2 performs clock synchronization with the TSN clock source based on the clock synchronization packet received from the remote device 1. In another implementation method, after step 910b, if the UE 2 also receives the clock synchronization packet from the UE 1 from the UPF, the UE 2 may alternatively perform clock synchronization with the TSN clock source based on the clock synchronization packet from the UE 1.

It should be noted that, if the UE 2 receives the clock synchronization packet from the remote device 1 before step 911b, the UE 2 may send the clock synchronization packet to the UPF, and the UPF does not process the clock synchronization packet.

It should be noted that when the UE 1 is abnormal, for example, has a link fault or goes offline, the UPF cannot receive the clock source declaration from the UE 1, and cannot forward the clock source declaration from the UE 1 to the UE 2. When detecting that receiving the clock source declaration from the UPF times out, the UE 2 sends the clock source declaration and the clock synchronization packet that are from the remote device 1 to the UPF, to ensure that the UPF can receive the clock source declaration and the clock synchronization packet.

According to this solution, both the UE 1 and the UE 2 receive and process a clock source declaration and a clock synchronization packet from a remote device, and synchronize with an external TSN clock source. In addition, the UPF processes only the clock synchronization packet from the UE 1. According to this solution, a plurality of UEs in a 5G system all can implement clock synchronization with an external TSN clock source. In addition, when one of the UEs cannot synchronize with the clock source due to a link fault, other UE may be switched to for clock source synchronization, to ensure reliability of synchronization of a 5G system bridge node with an external TSN clock source.

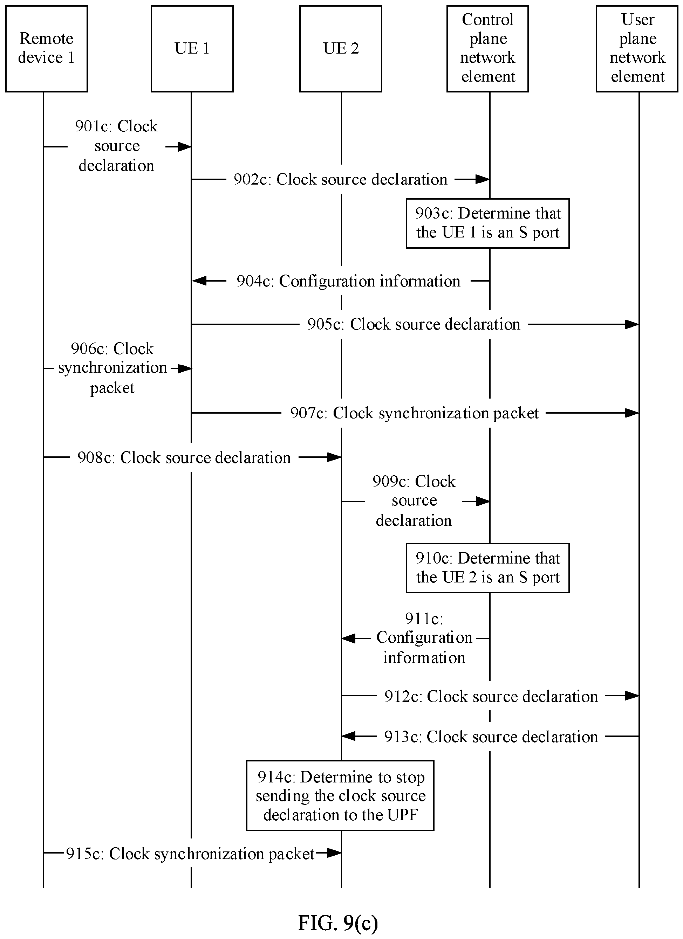

Based on the example shown in FIG. 9(a), this embodiment of this application provides a communication method. In the method, a port status of each device in a 5G system is determined on a control plane. As shown in FIG. 9(c), the communication method includes the following steps.

Step 901c to step 912c are the same as step 801c to step 812c in the embodiment in FIG. 8(c). Refer to the foregoing descriptions.

Step 913c: The UPF sends a clock source declaration to the UE 2. Correspondingly, the UE 2 receives the clock source declaration.

The clock source declaration herein is a clock source declaration received by the UPF from the UE 1.

The UPF determines that the clock source declaration received from the UE 1 is the same as the clock source declaration received from the UE 2, and the UPF still forwards the clock source declaration from the UE 1 to the UE 2. Optionally, the UPF further forwards the clock synchronization packet from the UE 1 to the UE 2.

Step 914c: The UE 2 determines to stop sending the clock source declaration to the UPF.

After receiving the clock source declaration from the UPF, the UE 2 determines that the clock source declaration received by the UE 2 from the UPF is the same as the clock source declaration received from the remote device 1, and the UE 2 determines to stop sending, to the UPF, the clock source declaration and a clock synchronization packet that are received from the remote device 1.

Step 912b: The remote device 1 sends the clock synchronization packet to the UE 2. Correspondingly, the UE 2 receives the clock synchronization packet.

After receiving the clock synchronization packet in this step, the UE 2 does not send the clock synchronization packet to the UPF.

The UE 2 performs clock synchronization with the TSN clock source based on the clock synchronization packet received from the remote device 1. In another implementation method, after step 913c, if the UE 2 also receives the clock synchronization packet from the UE 1 from the UPF, the UE 2 may alternatively perform clock synchronization with the TSN clock source based on the clock synchronization packet from the UE 1.

It should be noted that, if the UE 2 receives the clock synchronization packet from the remote device 1 before step 914c, the UE 2 may send the clock synchronization packet to the UPF, and the UPF does not process the clock synchronization packet.

It should be noted that when the UE 1 is abnormal, for example, has a link fault or goes offline, the UPF cannot receive the clock source declaration from the UE 1, and cannot forward the clock source declaration from the UE 1 to the UE 2. When detecting that receiving the clock source declaration from the UPF times out, the UE 2 sends the clock source declaration and the clock synchronization packet that are from the remote device 1 to the UPF, to ensure that the UPF can receive the clock source declaration and the clock synchronization packet. Optionally, the UE 2 further sends indication information to a control plane network element, to indicate that receiving the clock source declaration from the UPF times out, or the UE 2 sends the indication information to the UPF, and the UPF sends the indication information to the control plane network element. After receiving the indication information, the control plane network element updates a port status of a device in the 5G system. For example, if a port status corresponding to a session of the UE 2 is previously configured as a P port for the UPF, the control plane network element may update the port status corresponding to the session of the UE 2 to an Sport.

In another implementation method, when the UE 1 is abnormal, the control plane network element determines that the UE 1 goes offline (for example, the control plane network element is an SMF, and the SMF may detect that the UE 1 goes offline; for another example, the control plane network element is an AF/NEF, and an SMF reports that the UE 1 goes offline to the AF/NEF when detecting that the UE 1 goes offline), or receives indication information from the UPF, where the indication information indicates that receiving the clock source declaration by the UPF from the UE 1 times out, or indicates that the UPF receives the clock source declaration from the UE 2. In this case, the control plane network element notifies the UE 2 to forward, to the UPF, the clock source declaration and the clock synchronization packet that are received from the remote device 1, and/or notifies the UPF to forward the clock source declaration from the UE 2 to another device and process the clock synchronization packet from the UE 2.

In another implementation method, the control plane network element receives indication information from the UE 1, where the indication information indicates that receiving the clock source declaration by the UE 1 times out. In this case, the control plane network element notifies the UE 2 to forward, to the UPF, the clock source declaration and the clock synchronization packet that are received from the remote device 1, and notifies the UPF to forward the clock source declaration from the UE 2 to another device and process the clock synchronization packet from the UE 2.

In another implementation method, the control plane network element receives indication information from the UE 2, where the indication information indicates that the UE 2 sends the clock source declaration to the UPF. In this case, the control plane network element may notify the UPF to forward the clock source declaration from the UE 2 to another device and process the clock synchronization packet from the UE 2.

Optionally, the control plane network element configures timeout duration for the UPF/UE 1/UE 2.

According to this solution, both the UE 1 and the UE 2 receive and process a clock source declaration and a clock synchronization packet from a remote device, and synchronize with an external TSN clock source. In addition, the UPF processes only the clock synchronization packet from the UE 1. According to this solution, a plurality of UEs in a 5G system all can implement clock synchronization with an external TSN clock source. In addition, when one of the UEs cannot synchronize with the clock source due to a link fault, other UE may be switched to for clock source synchronization, to ensure reliability of synchronization of a 5G system bridge node with an external TSN clock source.

### Embodiment 3

FIG. 10(a) is a diagram of an example of clock source synchronization. In this example, a TSN clock source is deployed on a network connected to UE 1 and UE 2, and the UE 1, the UE 2, and the connected network form a loop (which is simplified as that the UE 1 and the UE 2 are connected to a remote device in the figure). The UE 2 is determined as a P port, but may perform clock synchronization based on a clock synchronization packet received from a remote device 1.

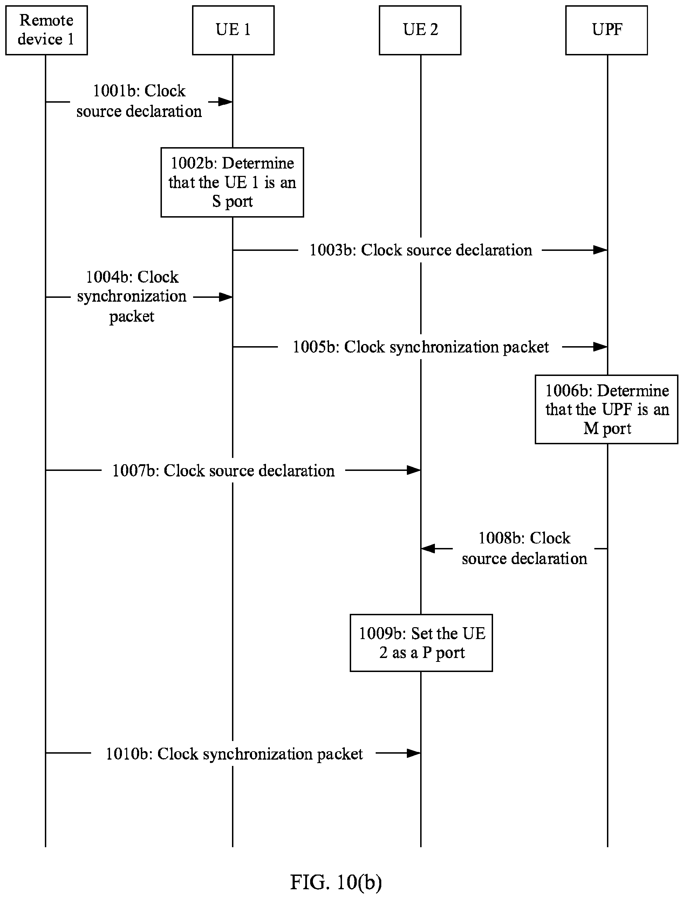

Based on the example shown in FIG. 10(a), this embodiment of this application provides a communication method. In the method, a port status of each device in a 5G system is determined on a user plane. As shown in FIG. 10(b), the communication method includes the following steps.

Step 1001b to step 1006b are the same as step 801b to step 806b in FIG. 8(b). Refer to the foregoing descriptions.

Step 1007b: The remote device 1 sends a clock source declaration to the UE 2. Correspondingly, the UE 2 receives the clock source declaration.

Step 1008b: The UPF sends a clock source declaration to the UE 2. Correspondingly, the UE 2 receives the clock source declaration.

The clock source declaration herein is a clock source declaration that is from the UE 1 and that is forwarded by the UPF.

A sequence of step 1007b and step 1008b is not limited.

If the UE 2 first receives the clock source declaration from the remote device 1, the UE 2 sets a port of the UE 2 as an S port. If the UE 2 first receives the clock source declaration from the UPF, the UE 2 sets a port of the UE 2 as an M port.

Step 1009b: The UE 2 sets the UE 2 as a P port.

The UE 2 determines that the clock source declaration received from the UPF is the same as the clock source declaration received from the remote device 1, and the UE 2 sets a port status of the UE 2 as the P port, in other words, updates the port status from the S port to the P port, or updates the port status from the M port to the P port.

Step 1010b: The remote device 1 sends the clock synchronization packet to the UE 2. Correspondingly, the UE 2 receives the clock synchronization packet.

The UE 2 performs clock synchronization with the TSN clock source based on the clock synchronization packet. Optionally, after step 1008b, if the UE 2 receives the clock synchronization packet from the UE 1 from the UPF, the UE 2 may alternatively perform clock synchronization with the TSN clock source based on the clock synchronization packet from the UE 1.

It should be noted that when the UE 1 is abnormal, for example, has a link fault or goes offline, the UPF cannot receive the clock source declaration from the UE 1, and cannot forward the clock source declaration from the UE 1 to the UE 2. When detecting that receiving the clock source declaration from the UPF times out, the UE 2 sends the clock source declaration and the clock synchronization packet that are from the remote device 1 to the UPF, to ensure that the UPF can receive the clock source declaration and the clock synchronization packet.

According to this solution, both the UE 1 and the UE 2 receive and process a clock source declaration and a clock synchronization packet from a remote device, and synchronize with an external TSN clock source. In addition, the UPF processes only the clock synchronization packet from the UE 1. According to this solution, a plurality of UEs in a 5G system all can implement clock synchronization with an external TSN clock source. In addition, when one of the UEs cannot synchronize with the clock source due to a link fault, other UE may be switched to for clock source synchronization.

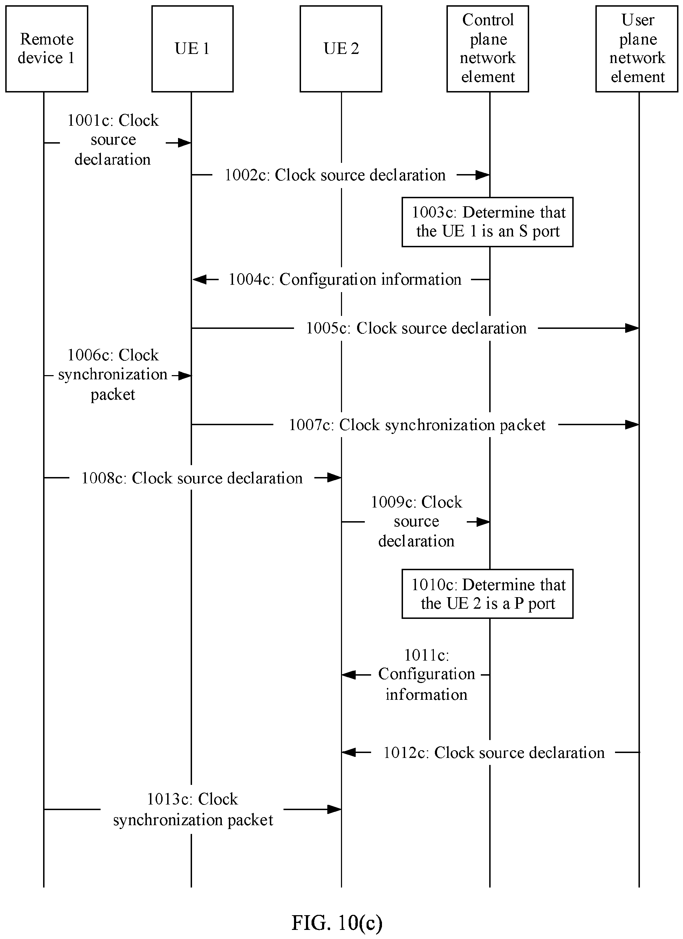

Based on the example shown in FIG. 10(a), this embodiment of this application provides a communication method. In the method, a port status of each device in a 5G system is determined on a control plane. As shown in FIG. 10(c), the communication method includes the following steps.

Step 1001c to step 1009c are the same as step 801c to step 809c shown in the embodiment in FIG. 8(c).

Step 1010c: The control plane network element determines that the UE 2 is a P port.

The control plane network element determines that a TSN clock source corresponding to the clock source declaration received from the UE 2 is the same as a TSN clock source corresponding to the clock source declaration received from the UE 1, and determines that the UE 2 is the P port.

Step 1011c: The control plane network element sends configuration information to the UE 2. Correspondingly, the UE 2 receives the configuration information.

The configuration information is for configuring the UE 2 as the P port.

In the foregoing solution, the UE 2 sends the clock source declaration to the control plane network element. In another implementation solution, the UE 2 may send the clock source declaration to the UPF, and then the UPF sends the clock source declaration to the control plane network element. Then, the control plane network element performs step 1010c and step 1011c. Optionally, the control plane network element may further configure, for the UPF, a port status corresponding to a session of the UE 2 as a P port.

Step 1012c: The UPF sends a clock source declaration to the UE 2. Correspondingly, the UE 2 receives the clock source declaration.

The clock source declaration herein is a clock source declaration received by the UPF from the UE 1.

Optionally, the UPF further sends the clock synchronization packet received from the UE 1 to the UE 2.

Step 1013c: The remote device 1 sends the clock synchronization packet to the UE 2. Correspondingly, the UE 2 receives the clock synchronization packet.

The UE 2 performs clock synchronization with the TSN clock source based on the clock synchronization packet. Optionally, if the UE 2 receives the clock synchronization packet from the UE 1 from the UPF, the UE 2 may alternatively perform clock synchronization with the TSN clock source based on the clock synchronization packet from the UE 1.

It should be noted that when the UE 1 is abnormal, for example, has a link fault or goes offline, the UPF cannot receive the clock source declaration from the UE 1, and cannot forward the clock source declaration from the UE 1 to the UE 2. When detecting that receiving the clock source declaration from the UPF times out, the UE 2 sends the clock source declaration and the clock synchronization packet that are from the remote device 1 to the UPF, to ensure that the UPF can receive the clock source declaration and the clock synchronization packet. Optionally, the UE 2 further sends indication information to the control plane network element, to indicate that receiving the clock source declaration from the UPF times out, or the UE 2 sends the indication information to the UPF, and the UPF sends the indication information to the control plane network element. After receiving the indication information, the control plane network element updates a port status of a device in the 5G system. For example, if the port status corresponding to the session of the UE 2 is previously configured as a P port for the UPF, the control plane network element may update the port status corresponding to the session of the UE 2 to an Sport.

In another implementation method, when the UE 1 is abnormal, the control plane network element determines that the UE 1 goes offline (for example, the control plane network element is an SMF, and the SMF may detect that the UE 1 goes offline; for another example, the control plane network element is an AF/NEF, and an SMF reports that the UE 1 goes offline to the AF/NEF when detecting that the UE 1 goes offline), or receives indication information from the UPF, where the indication information indicates that receiving the clock source declaration by the UPF from the UE 1 times out, or indicates that the UPF receives the clock source declaration from the UE 2. In this case, the control plane network element notifies the UE 2 to forward, to the UPF, the clock source declaration and the clock synchronization packet that are received from the remote device 1, and/or notifies the UPF to forward the clock source declaration from the UE 2 to another device and process the clock synchronization packet from the UE 2.

In another implementation method, the control plane network element receives indication information from the UE 1, where the indication information indicates that receiving the clock source declaration by the UE 1 times out. In this case, the control plane network element notifies the UE 2 to forward, to the UPF, the clock source declaration and the clock synchronization packet that are received from the remote device 1, and notifies the UPF to forward the clock source declaration from the UE 2 to another device and process the clock synchronization packet from the UE 2.

In another implementation method, the control plane network element receives indication information from the UE 2, where the indication information indicates that the UE 2 sends the clock source declaration to the UPF. In this case, the control plane network element may notify the UPF to forward the clock source declaration from the UE 2 to another device and process the clock synchronization packet from the UE 2.

Optionally, the control plane network element configures timeout duration for the UPF/UE 1/UE 2.

According to this solution, both the UE 1 and the UE 2 receive and process a clock source declaration and a clock synchronization packet from a remote device, and synchronize with an external TSN clock source. In addition, the UPF processes only the clock synchronization packet from the UE 1. According to this solution, a plurality of UEs in a 5G system all can implement clock synchronization with an external TSN clock source. In addition, when one of the UEs cannot synchronize with the clock source due to a link fault, other UE may be switched to for clock source synchronization, to ensure reliability of synchronization of a 5G system bridge node with an external TSN clock source.

The foregoing mainly describes the solutions provided in this application from a perspective of interaction between the network elements. It may be understood that, to implement the foregoing functions, each network element includes a corresponding hardware structure and/or software module for executing each function. A person of ordinary skill in the art should easily be aware that, in combination with the examples described in embodiments disclosed in this specification, units and algorithm steps may be implemented by hardware or a combination of hardware and computer software in the present invention. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

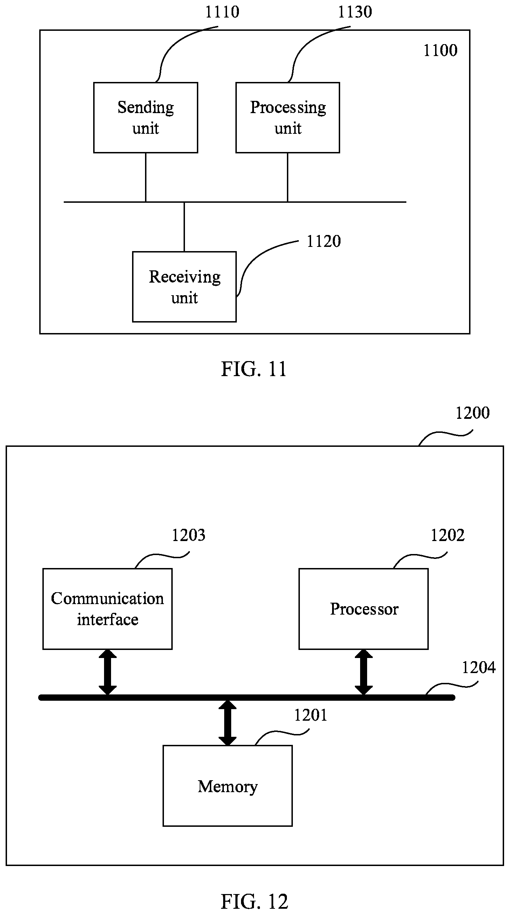

FIG. 11 is a schematic diagram of a communication apparatus according to an embodiment of this application. The communication apparatus is configured to implement steps corresponding to the terminal device, the user plane network element, or the control plane network element in the foregoing embodiments. As shown in FIG. 11, the communication apparatus 1100 includes a sending unit 1110, a receiving unit 1120, and a processing unit 1130.

In a first embodiment, the apparatus 1100 is used in a terminal device, or the apparatus 1110 is a terminal device.

The processing unit 1130 is configured to detect whether a clock source declaration from a user plane network element is received within first duration, where a port status of the terminal device is a slave state or a passive state. The sending unit 1110 is configured to: when the receiving unit 1120 does not receive the clock source declaration from the user plane network element within the first duration, send a clock source declaration from a remote device to the user plane network element.

In a possible implementation method, the receiving unit 1120 is further configured to receive configuration information from a control plane network element, where the configuration information is for configuring the port status of the terminal device to the slave state or the passive state; or the processing unit 1130 is further configured to: determine that a clock source corresponding to the clock source declaration from the user plane network element is the same as a clock source corresponding to the clock source declaration from the remote device, and determine that the port status of the terminal device is the slave state or the passive state.

In a possible implementation method, the receiving unit 1120 is further configured to receive a clock synchronization packet from the remote device; and the processing unit 1130 is further configured to perform clock synchronization based on the clock synchronization packet.

In a possible implementation method, the receiving unit 1120 is further configured to receive a clock synchronization packet from the user plane, and the processing unit 1130 is further configured to perform clock synchronization based on the clock synchronization packet.

In a possible implementation method, the processing unit 1130 is further configured to: when the port status of the terminal device is the passive state, and the receiving unit 1120 does not receive the clock source declaration from the user plane network element within the first duration, determine that the port status of the terminal device is the slave state.

In a second embodiment, the apparatus 1100 is used in a user plane network element, or the apparatus 1110 is a user plane network element.

The receiving unit 1120 is configured to receive a clock source declaration from a first terminal device at a first moment; and the sending unit 1110 is configured to: send the clock source declaration from the first terminal device through a port of the user plane network element or a terminal device in a master port state; and if the receiving unit 1120 does not receive the clock source declaration from the first terminal device within first duration or receives, from a control plane network element, indication information that indicates to send a clock source declaration from a second terminal device, send the clock source declaration from the second terminal device through the port of the user plane network element or the terminal device in the master port state, where the first duration is later than the first moment, where a clock source corresponding to the clock source declaration from the first terminal device is the same as a clock source corresponding to the clock source declaration from the second terminal device.

In a possible implementation method, the processing unit 1130 is configured to: determine that the clock source declaration from the first terminal device is the same as the clock source declaration from the second terminal device, and determine to send the clock source declaration from the first terminal device; or the receiving unit 1120 is further configured to receive configuration information from the control plane network element, where the configuration information is for configuring the user plane network element to send the clock source declaration from the first terminal device.

In a possible implementation method, when the receiving unit 1120 does not receive the clock source declaration from the first terminal device within first duration, the sending unit 1110 is further configured to: send indication information to the control plane network element, where the indication information indicates that the clock source declaration from the first terminal device is not received within the first duration; and/or send notification information to the control plane network element, where the notification information indicates that the user plane network element sends the clock source declaration from the second terminal device.

In a possible implementation method, the first duration is preconfigured, or the first duration is configured by the control plane network element.

In a possible implementation method, the sending unit 1110 is further configured to send the clock source declaration from the first terminal device to the second terminal device.

In a third embodiment, the apparatus 1100 is used in a control plane network element, or the apparatus 1110 is a control plane network element.

The receiving unit 1120 is configured to: receive a clock source declaration from a first terminal device, and receive a clock source declaration from a second terminal device. The processing unit 1130 is configured to: determine that a port status of the first terminal device is a slave state; determine that a clock source corresponding to the clock source declaration from the second terminal device is the same as a clock source corresponding to the clock source declaration from the first terminal device, and determine that a port status of the second terminal device is a passive state; and determine that a first condition is met, and determine that the port status of the second terminal device is the slave state, and/or to send first indication information to a user plane network element through the sending unit 1110, where the first indication information indicates the user plane network element to send the clock source declaration from the second terminal device.

In a possible implementation method, that the processing unit 1130 is configured to determine that a first condition is met includes: determining that the receiving unit 1120 receives second indication information from the user plane network element, where the second indication information indicates that the user plane network element does not receive the clock source declaration from the first terminal device within first duration; determining that the receiving unit 1120 receives third indication information from the first terminal device, where the third indication information indicates that the first terminal device does not receive a clock source declaration from a remote device within second duration; determining that the first terminal device is abnormal; or determining that the receiving unit 1120 receives fourth indication information from the second terminal device, where the fourth indication information indicates that the second terminal device does not receive a clock source declaration from the user plane network element within third duration.

In a possible implementation method, the receiving unit 1120 is further configured to receive notification information from the user plane network element, where the notification information indicates that the user plane network element sends the clock source declaration from the second terminal device.

In a fourth embodiment, the apparatus 1100 is used in a control plane network element, or the apparatus 1110 is a control plane network element.

The receiving unit 1120 is configured to: receive a clock source declaration from a first terminal device, and receive a clock source declaration from a second terminal device. The processing unit 1130 is configured to: determine that a port status of the first terminal device is a slave state; and determine that a clock source corresponding to the clock source declaration from the second terminal device is the same as a clock source corresponding to the clock source declaration from the first terminal device, and determine that a port status of the second terminal device is the slave state.

In a possible implementation method, the sending unit 1110 is configured to: when the processing unit 1130 determines that a first condition is met, send first indication information to a user plane network element. The first indication information indicates the user plane network element to send the clock source declaration from the second terminal device.

In a possible implementation method, that the processing unit 1130 is configured to determine that a first condition is met includes:
determining that the receiving unit 1120 receives second indication information from the user plane network element, where the second indication information indicates that the user plane network element does not receive the clock source declaration from the first terminal device within first duration; determining that the receiving unit 1120 receives third indication information from the first terminal device, where the third indication information indicates that the first terminal device does not receive a clock source declaration from a remote device within second duration; determining that the first terminal device is abnormal; or
determining that the receiving unit 1120 receives fourth indication information from the second terminal device, where the fourth indication information indicates that the second terminal device does not receive a clock source declaration from the user plane network element within third duration.

Optionally, the communication apparatus may further include a storage unit. The storage unit is configured to store data or instructions (which may also be referred to as code or programs). The foregoing units may interact with or be coupled to the storage unit, to implement a corresponding method or function. For example, the processing unit 1130 may read the data or the instructions in the storage unit, so that the communication apparatus implements the methods in the foregoing embodiments.

It should be understood that division into the units in the communication apparatus is merely logical function division. In an actual implementation, all or some of the units may be integrated into one physical entity, or may be physically separated. In addition, all the units in the communication apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the communication apparatus for implementation. In addition, each unit may alternatively be stored in a memory in a form of a program to be invoked by a processing element of the communication apparatus to perform a function of the unit. In addition, such units may be integrated together or may be individually implemented. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

In an example, the unit in any one of the foregoing communication apparatuses may be one or more integrated circuits configured to implement the foregoing methods, for example, one or more application-specific integrated circuits (application-specific integrated circuits, ASICs), or one or more microprocessors (digital signal processors, DSPs), or one or more field programmable gate arrays (field programmable gate arrays, FPGAs), or a combination of at least two of these integrated circuit forms. For another example, when the units in the communication apparatus may be implemented in a form of scheduling a program by a processing element, the processing element may be a general-purpose processor, for example, a central processing unit (central processing unit, CPU) or another processor that can invoke the program. For still another example, the units may be integrated and implemented in a form of a system-on-a-chip (system-on-a-chip, SOC).

FIG. 12 is a schematic diagram of a communication apparatus according to this application. The apparatus may be the terminal device, the user plane network element, or the control plane network element in the foregoing embodiments. The apparatus 1200 includes a processor 1202, a communication interface 1203, and a memory 1201. Optionally, the apparatus 1200 may further include a communication line 1204. The communication interface 1203, the processor 1202, and the memory 1201 may be connected to each other through the communication line 1204. The communication line 1204 may be a peripheral component interconnect (peripheral component interconnect, PCI for short) bus, an extended industry standard architecture (extended industry standard architecture, EISA for short) bus, or the like. The communication line 1204 may be classified into an address bus, a data bus, a control bus, and the like. For ease of representation, only one thick line is for representing the bus in FIG. 12, but this does not mean that there is only one bus or only one type of bus.

The processor 1202 may be a CPU, a microprocessor, an ASIC, or one or more integrated circuits configured to control program execution in the solutions of this application.

The communication interface 1203 may be any apparatus like a transceiver, and is configured to communicate with another device or a communication network, for example, Ethernet, a radio access network (radio access network, RAN), a wireless local area network (wireless local area networks, WLAN), or a wired access network.

The memory 1201 may be a ROM or another type of static storage device that can store static information and instructions, or a RAM or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile optical disc, a blue optical disc, and the like), a magnetic disk storage medium or another magnetic storage device, or any other medium that can carry or store expected program code in a form of an instruction structure or a data structure and can be accessed by a computer. However, this is not limited herein. The memory may exist independently and is connected to the processor through the communication line 1204. The memory may alternatively be integrated with the processor.

The memory 1201 is configured to store computer-executable instructions for executing the solutions of this application, and the processor 1202 controls execution of the computer-executable instructions. The processor 1202 is configured to execute the computer-executable instructions stored in the memory 1201, to implement the communication method provided in the foregoing embodiments of this application.

Optionally, the computer-executable instructions in this embodiment of this application may also be referred to as application program code. This is not specifically limited in this embodiment of this application.

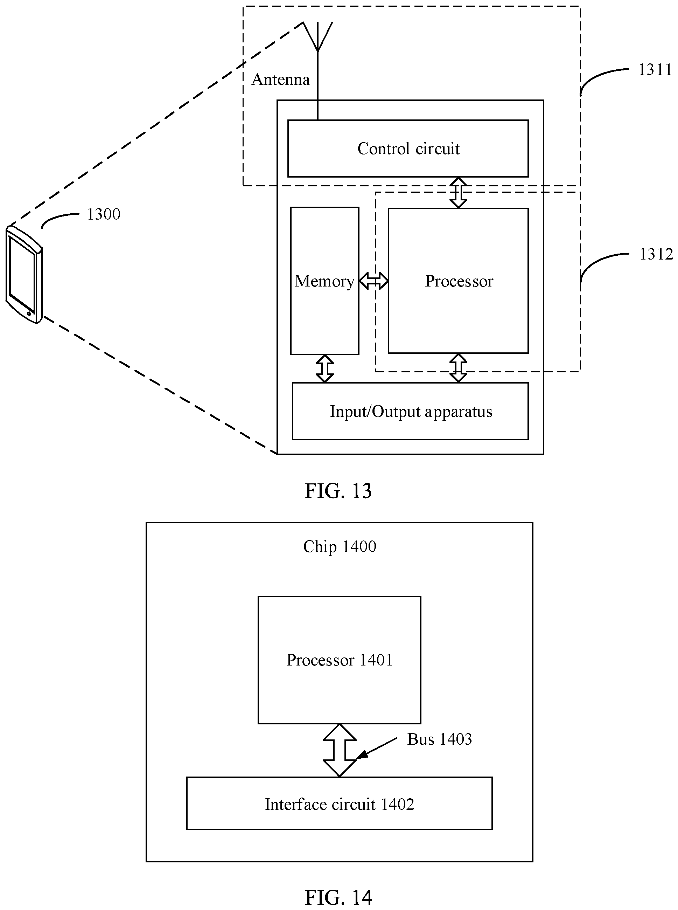

FIG. 13 is a schematic diagram of a structure of a terminal device. The terminal device is applicable to the terminal device in any one of the foregoing embodiments. For ease of description, FIG. 13 shows only main components of the terminal device. As shown in FIG. 13, the terminal device 1300 includes a processor, a memory, a control circuit, an antenna, and an input/output apparatus. The processor is mainly configured to process a communication protocol and communication data, control the entire terminal, execute a software program, and process data of the software program. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the terminal device is powered on, the processor may read a software program in a storage unit, parse and execute instructions of the software program, and process data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in an electromagnetic wave form through the antenna. When data is sent to the terminal device, the radio frequency circuit receives a radio frequency signal through the antenna, further converts the radio frequency signal into a baseband signal, and outputs the baseband signal to the processor. The processor converts the baseband signal into data, and processes the data.

For ease of description, FIG. 13 shows only one memory and one processor. In an actual terminal device, there may be a plurality of processors and memories. The memory may also be referred to as a storage medium, a storage device, or the like. This is not limited in this embodiment of the present invention.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 13 integrates functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, and the terminal device may include a plurality of central processing units to enhance a processing capability of the terminal device. The components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have sending and receiving functions may be considered as a transceiver unit 1311 of the terminal device 1300, and the processor having a processing function may be considered as a processing unit 1312 of the terminal device 1300. As shown in FIG. 13, the terminal device 1300 includes the transceiver unit 1311 and the processing unit 1312. The transceiver unit may also be referred to as a transceiver, a transceiver machine, a transceiver apparatus, or the like. Optionally, a component for implementing a receiving function in the transceiver unit 1311 may be considered as a receiving unit, and a component for implementing a sending function in the transceiver unit 1311 may be considered as a sending unit. In other words, the transceiver unit 1311 includes the receiving unit and the sending unit. For example, the receiving unit may also be referred to as a receiver, a receive machine, or a receiving circuit, and the sending unit may also be referred to as a transmitter, a transmit machine, or a transmitting circuit. Optionally, the receiving unit and the sending unit may be one integrated unit, or may be a plurality of independent units. The receiving unit and the sending unit may be in one geographical position, or may be distributed in a plurality of geographical positions.

FIG. 14 is a schematic diagram of a structure of a chip according to an embodiment of this application. The chip 1400 includes one or more processors 1401 and an interface circuit 1402. Optionally, the chip 1400 may further include a bus 1403.

The processor 1401 may be an integrated circuit chip and has a signal processing capability. In an implementation process, each step in the foregoing methods may be performed by using a hardware integrated logical circuit in the processor 1401 or instructions in a form of software. The processor 1401 may be a general-purpose processor, a digital signal processor (DSP), an application-specific integrated circuit (ASIC), a field programmable gate array (FPGA) or another programmable logic device, a discrete gate or transistor logic device, or a discrete hardware component. The processor may implement or perform the methods and steps that are disclosed in embodiments of this application. The general-purpose processor may be a microprocessor, or the processor may be any conventional processor or the like.

The interface circuit 1402 may be configured to send or receive data, instructions, or information. The processor 1401 may process the data, the instructions, or other information received through the interface circuit 1402, and may send processed information through the interface circuit 1402.

Optionally, the chip further includes a memory. The memory may include a read-only memory and a random access memory, and provide operation instructions and data for the processor. A part of the memory may further include a non-volatile random access memory (NVRAM).

Optionally, the memory stores an executable software module or a data structure, and the processor may perform a corresponding operation by invoking operation instructions (the operation instructions may be stored in an operating system) stored in the memory.

Optionally, the chip may be used in the communication apparatus (including the terminal device, the user plane network element, and the control plane network element) in embodiments of this application. Optionally, the interface circuit 1402 may be configured to output an execution result of the processor 1401. For the communication method provided in one or more embodiments of this application, refer to the foregoing embodiments. Details are not described herein again.

It should be noted that functions corresponding to each of the processor 1401 and the interface circuit 1402 may be implemented by using a hardware design, may be implemented by using a software design, or may be implemented by combining software and hardware. This is not limited herein.

An embodiment of this application further provides a communication system. The communication system includes the user plane network element and the control plane network element in any one of the foregoing embodiments.

An embodiment of this application further provides a chip, including at least one processor and an interface. The interface is configured to provide program instructions or data for the at least one processor. The at least one processor is configured to execute the program instructions, to implement the method in any one of the foregoing embodiments.

A person of ordinary skill in the art may understand that various numbers such as "first" and "second" in this application are merely used for differentiation for ease of description, and are not used to limit the scope of embodiments of this application or represent a sequence. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. "At least one" means one or more. "At least two" means two or more. "At least one", "any one", or a similar expression thereof indicates any combination of the items, and includes a singular item (piece) or any combination of plural items (pieces). For example, at least one of a, b, or c may indicate: a, b, c, a and b, a and c, b and c, or a, b, and c, where a, b, and c may be singular or plural. The term "a plurality of" means two or more, and another quantifier is similar to this. In addition, an element (element) that appears in singular forms "a", "an", and "the" does not mean "one or only one" unless otherwise specified in the context, but means "one or more". For example, "a device" means one or more such devices.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

The various illustrative logical units and circuits in embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors in combination with a digital signal processor core, or any other similar configuration.

Steps of the methods or algorithms described in embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may be connected to a processor, so that the processor may read information from the storage medium and write information to the storage medium. Alternatively, the storage medium may be integrated into a processor. The processor and the storage medium may be disposed in the ASIC.

The computer program instructions may alternatively be loaded onto the computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Although this application is described with reference to specific features and embodiments thereof, it is clear that various modifications and combinations may be made to them without departing from the spirit and scope of this application. Correspondingly, the specification and the accompanying drawings are merely example descriptions of this application defined by the appended claims, and are considered as any of or all modifications, variations, combinations or equivalents that cover the scope of this application. It is clearly that, a person skilled in the art can make various modifications and variations to this application without departing from the scope of this application. In this way, this application is intended to cover these modifications and variations of this application provided that they fall within the scope of protection defined by the claims of this application and their equivalent technologies.

## Claims

1. A communication method, comprising:
detecting, by a terminal device, whether a clock source declaration from a user plane network element is received within first duration, wherein a port status of the terminal device is a slave state or a passive state; and
when the terminal device does not receive the clock source declaration from the user plane network element within the first duration, sending a clock source declaration from a remote device to the user plane network element.

2. The method according to claim 1, further comprising:
receiving, by the terminal device, configuration information from a control plane network element, wherein the configuration information is for configuring the port status of the terminal device to the slave state or the passive state; or
determining, by the terminal device, that a clock source corresponding to the clock source declaration from the user plane network element is the same as a clock source corresponding to the clock source declaration from the remote device, and determining that the port status of the terminal device is the slave state or the passive state.

3. The method according to claim 1 or 2, further comprising:
receiving, by the terminal device, a clock synchronization packet from the remote device; and
performing, by the terminal device, clock synchronization based on the clock synchronization packet.

4. The method according to claim 1 or 2, further comprising:
receiving, by the terminal device, a clock synchronization packet from the user plane; and
performing, by the terminal device, clock synchronization based on the clock synchronization packet.

5. The method according to any one of claims 1 to 4, further comprising:
when the port status of the terminal device is the passive state, and the terminal device does not receive the clock source declaration from the user plane network element within the first duration, determining, by the terminal device, that the port status of the terminal device is the slave state.

6. A communication method, comprising:
receiving, by a user plane network element, a clock source declaration from a first terminal device at a first moment;
sending, by the user plane network element, the clock source declaration from the first terminal device through a port of the user plane network element or a terminal device in a master port state; and
if the user plane network element does not receive the clock source declaration from the first terminal device within first duration, or the user plane network element receives, from a control plane network element, indication information that indicates to send a clock source declaration from a second terminal device, sending, by the user plane network element, the clock source declaration from the second terminal device through the port of the user plane network element or the terminal device in the master port state, wherein the first duration is later than the first moment, wherein
a clock source corresponding to the clock source declaration from the first terminal device is the same as a clock source corresponding to the clock source declaration from the second terminal device.

7. The method according to claim 6, further comprising:
determining, by the user plane network element, that the clock source declaration from the first terminal device is the same as the clock source declaration from the second terminal device, and determining to send the clock source declaration from the first terminal device; or
receiving, by the user plane network element, configuration information from the control plane network element, wherein the configuration information is for configuring the user plane network element to send the clock source declaration from the first terminal device.

8. The method according to claim 6 or 7, wherein when the user plane network element does not receive the clock source declaration from the first terminal device within the first duration, the method further comprises:
sending, by the user plane network element, indication information to the control plane network element, wherein the indication information indicates that the clock source declaration from the first terminal device is not received within the first duration; and/or
sending, by the user plane network element, notification information to the control plane network element, wherein the notification information indicates that the user plane network element sends the clock source declaration from the second terminal device.

9. The method according to any one of claims 6 to 8, wherein the first duration is preconfigured; or
the first duration is configured by the control plane network element.

10. The method according to any one of claims 6 to 9, further comprising:
sending, by the user plane network element, the clock source declaration from the first terminal device to the second terminal device.

11. A communication method, comprising:
receiving, by a control plane network element, a clock source declaration from a first terminal device;
determining, by the control plane network element, that a port status of the first terminal device is a slave state;
receiving, by the control plane network element, a clock source declaration from a second terminal device;
determining, by the control plane network element, that a clock source corresponding to the clock source declaration from the second terminal device is the same as a clock source corresponding to the clock source declaration from the first terminal device, and determining that a port status of the second terminal device is a passive state; and
determining, by the control plane network element, that a first condition is met, and determining that the port status of the second terminal device is the slave state, and/or sending first indication information to a user plane network element, wherein the first indication information indicates the user plane network element to send the clock source declaration from the second terminal device.

12. The method according to claim 11, wherein the determining, by the control plane network element, that a first condition is met comprises:
receiving, by the control plane network element, second indication information from the user plane network element, wherein the second indication information indicates that the user plane network element does not receive the clock source declaration from the first terminal device within first duration;
receiving, by the control plane network element, third indication information from the first terminal device, wherein the third indication information indicates that the first terminal device does not receive a clock source declaration from a remote device within second duration;
determining, by the control plane network element, that the first terminal device is abnormal; or
receiving, by the control plane network element, fourth indication information from the second terminal device, wherein the fourth indication information indicates that the second terminal device does not receive a clock source declaration from the user plane network element within third duration.

13. The method according to claim 11 or 12, further comprising:
receiving, by the control plane network element, notification information from the user plane network element, wherein the notification information indicates that the user plane network element sends the clock source declaration from the second terminal device.

14. A terminal device, comprising a processing unit, a sending unit, and a receiving unit, wherein
the processing unit is configured to detect whether a clock source declaration from a user plane network element is received within first duration, wherein a port status of the terminal device is a slave state or a passive state; and
the sending unit is configured to: when the receiving unit does not receive the clock source declaration from the user plane network element within the first duration, send a clock source declaration from a remote device to the user plane network element.

15. The terminal device according to claim 14, wherein
the receiving unit is further configured to receive configuration information from a control plane network element, wherein the configuration information is for configuring the port status of the terminal device to the slave state or the passive state; or
the processing unit is further configured to: determine that a clock source corresponding to the clock source declaration from the user plane network element is the same as a clock source corresponding to the clock source declaration from the remote device, and determine that the port status of the terminal device is the slave state or the passive state.

16. The terminal device according to claim 14 or 15, wherein
the receiving unit is further configured to receive a clock synchronization packet from the remote device; and the processing unit is further configured to perform clock synchronization based on the clock synchronization packet.

17. The terminal device according to claim 14 or 15, further comprising:
the receiving unit is further configured to receive a clock synchronization packet from the user plane; and
the processing unit is further configured to perform clock synchronization based on the clock synchronization packet.

18. The terminal device according to any one of claims 14 to 17, wherein
the processing unit is further configured to: when the port status of the terminal device is the passive state, and the receiving unit does not receive the clock source declaration from the user plane network element within the first duration, determine that the port status of the terminal device is the slave state.

19. A user plane network element, comprising a sending unit and a receiving unit, wherein
the receiving unit is configured to receive a clock source declaration from a first terminal device at a first moment; and
the sending unit is configured to: send the clock source declaration from the first terminal device through a port of the user plane network element or a terminal device in a master port state; and if the receiving unit does not receive the clock source declaration from the first terminal device within first duration or receives, from a control plane network element, indication information that indicates to send a clock source declaration from a second terminal device, send the clock source declaration from the second terminal device through the port of the user plane network element or the terminal device in the master port state, wherein the first duration is later than the first moment, wherein
a clock source corresponding to the clock source declaration from the first terminal device is the same as a clock source corresponding to the clock source declaration from the second terminal device.

20. The user plane network element according to claim 19, further comprising a processing unit, configured to:
determine that the clock source declaration from the first terminal device is the same as the clock source declaration from the second terminal device, and determine to send the clock source declaration from the first terminal device; or
the receiving unit is further configured to receive configuration information from the control plane network element, wherein the configuration information is for configuring the user plane network element to send the clock source declaration from the first terminal device.

21. The user plane network element according to claim 19 or 20, wherein when the receiving unit does not receive the clock source declaration from the first terminal device within the first duration, the sending unit is further configured to:
send indication information to the control plane network element, wherein the indication information indicates that the clock source declaration from the first terminal device is not received within the first duration; and/or
send notification information to the control plane network element, wherein the notification information indicates that the user plane network element sends the clock source declaration from the second terminal device.

22. The user plane network element according to any one of claims 19 to 21, wherein the first duration is preconfigured; or
the first duration is configured by the control plane network element.

23. The user plane network element according to any one of claims 19 to 22, wherein
the sending unit is further configured to send the clock source declaration from the first terminal device to the second terminal device.

24. A communication apparatus, comprising a sending unit, a receiving unit, and a processing unit, wherein
the receiving unit is configured to: receive a clock source declaration from a first terminal device, and receive a clock source declaration from a second terminal device; and
the processing unit is configured to: determine that a port status of the first terminal device is a slave state; determine that a clock source corresponding to the clock source declaration from the second terminal device is the same as a clock source corresponding to the clock source declaration from the first terminal device, and determine that a port status of the second terminal device is a passive state; and determine that a first condition is met, and determine that the port status of the second terminal device is the slave state, and/or to send first indication information to a user plane network element through the sending unit, wherein the first indication information indicates the user plane network element to send the clock source declaration from the second terminal device.

25. The apparatus according to claim 24, wherein that the processing unit is configured to determine that a first condition is met comprises:
determining that the receiving unit receives second indication information from the user plane network element, wherein the second indication information indicates that the user plane network element does not receive the clock source declaration from the first terminal device within first duration;
determining that the receiving unit receives third indication information from the first terminal device, wherein the third indication information indicates that the first terminal device does not receive a clock source declaration from a remote device within second duration;
determining that the first terminal device is abnormal; or
determining that the receiving unit receives fourth indication information from the second terminal device, wherein the fourth indication information indicates that the second terminal device does not receive a clock source declaration from the user plane network element within third duration.

26. The apparatus according to claim 24 or 25, wherein the receiving unit is further configured to receive notification information from the user plane network element, wherein the notification information indicates that the user plane network element sends the clock source declaration from the second terminal device.

27. A computer-readable storage medium, wherein the computer-readable storage medium stores a program, and when the program is invoked by a processor, the method according to any one of claims 1 to 13 is performed.

28. A computer program product, comprising a computer program, wherein when the computer program is run on a computer, the method according to any one of claims 1 to 13 is performed.
